# EUROPÄISCHE PATENTSCHRIFT

(11) **EP 4 061 761 B1**
(45) Veröffentlichungstag und Bekanntmachung des Hinweises auf die Patenterteilung: **03.12.2025**
(21) Anmeldenummer: 20797715.8
(22) Anmeldetag: 26.10.2020
(51) Int. Cl.: B65G 1/04, B66C 9/04, B66C 19/00

(54) **LAGER- UND KOMMISSIONIERSYSTEM MIT REGALLOSEM BODENLAGER UND HANDHABUNGS-FAHRZEUG**
STORAGE AND PICKING SYSTEM WITH SHELF-FREE FLOOR STORAGE SYSTEM AND HANDLING VEHICLE
SYSTÈME DE STOCKAGE ET DE PRÉLÈVEMENT DOTÉ D'UN SYSTÈME DE STOCKAGE AU SOL SANS ÉTAGÈRE ET D'UN VÉHICULE DE MANUTENTION

(30) Priorität: 21.11.2019 DE 102019131427
(43) Veröffentlichungstag der Anmeldung: 28.09.2022
(73) Patentinhaber: SSI Schäfer Automation GmbH (DE), 97232 Giebelstadt (DE)
(72) Erfinder: HINTZ, Andreas, 8193 Eglisau (CH)
(74) Vertreter: Witte, Weller & Partner Patentanwälte mbB
(86) Internationale Anmeldenummer: PCT/EP2020/080015
(87) Internationale Veröffentlichungsnummer: WO 2021/099065

(56) Entgegenhaltungen:
- WO-A1-2006/113701
- WO-A1-2015/135032
- GB-A- 1 142 929

## Beschreibung

Die vorliegende Offenbarung betrifft ein Lager- und Kommissioniersystem mit einem regallosen Bodenlager und mindestens einem Handhabungs-Fahrzeug. Die Offenbarung betrifft ferner ein Verfahren zum Betreiben des Lager- und Kommissioniersystems.

In der Intralogistik werden herkömmliche (Handhabungs-) Fahrzeuge eingesetzt, um Lagergüter in herkömmlichen Lager- und Kommissioniersystemen zu bewegen, wobei die Lagergüter in einem Bodenlager als Stapel gelagert werden. Es gibt Anwendungen im Inneren von Gebäuden und Anwendungen, bei denen die Fahrzeuge draußen eingesetzt werden.

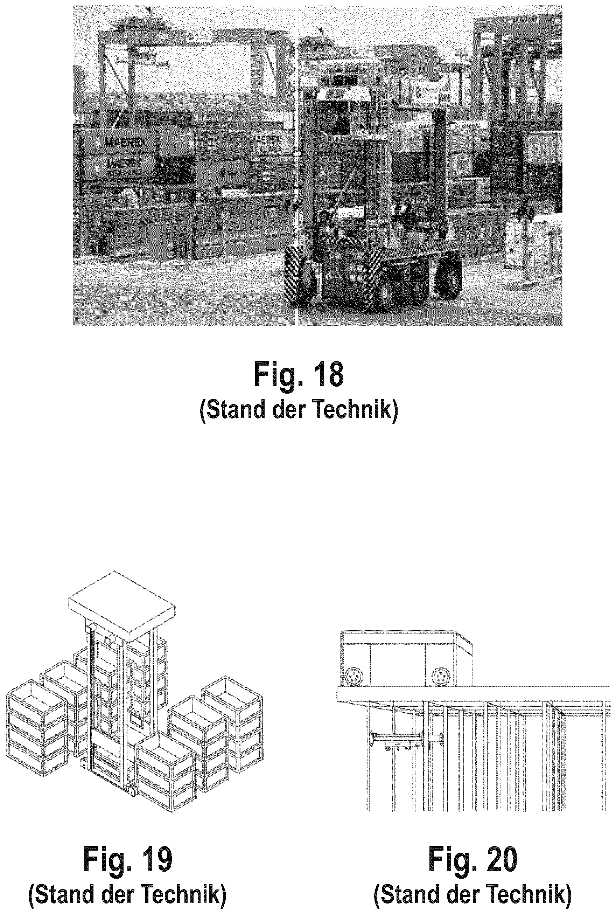

Fig. 18 zeigt eine (logistische) Anwendung im Außenbereich, wo (Seefracht-)Container (z.B. in Häfen) mit entsprechend dimensionierten Container-Fahrzeugen transportiert werden. Diese Fahrzeuge sind groß und schwer, so dass diese Fahrzeuge schwer zu lenken sind. Diese Fahrzeuge werden nicht autonom betrieben, sondern von einem Fahrer gesteuert. Diese Fahrzeuge können sich nicht beliebig innerhalb des Bodenlagers bewegen. Die Bewegung durch das Bodenlager ist durch eine Vorzugsrichtung ausgezeichnet. Diese Fahrzeuge müssen Kurven fahren, um die Fahrrichtung zu ändern. Diese Kurvenfahrt erfolgt außerhalb des Bodenlagers während der Fahrt.

Das Dokument WO 2006/ 113 701 A1 betrifft eine Vorrichtung zum Anheben, Handhaben
und Transportieren eines Containers und zeigt jeweils die Oberbegriffe der unabhängigen Ansprüche 1 bzw. 2.

Das Dokument GB 1 142 929A betrifft einen Torstapler.

Das Dokument WO 2015/ 135 032 A1 betrifft einen Torstapler.

Das Dokument WO 2015/ 135 032 A1 betrifft einen Portalhubwagen bzw. Torstapler ("straddle carriere", vgl. Titel) und offenbart ein zu Fig. 18 ähnliches Container-Fahrzeug.

Das Dokument US 2019 / 0 248 629 A1 betrifft eine Anordnung einer Portalhubvorrichtung sowie eine Reihe von beabstandeten Markierungselementen (vgl. Titel) und offenbart ebenfalls ein Container-Fahrzeug.

Des Weiteren sind Anwendungen im Innenbereich bekannt. Fig. 19 zeigt ein autonom verfahrbares Fahrzeug in einem Bodenlager für gestapelte Lagergüter, wie es detailliert in der DE 10 213 019 419 A1 offenbart ist. Dieses Fahrzeug kann ebenfalls nur in einer Richtung durch das Bodenlager verfahren werden. Dieses Fahrzeug interagiert seitlich mit den Lagergutstapeln. Dies bedeutet, dass das Fahrzeug neben den Stapeln steht, um Lagergüter aufzunehmen oder abzugeben. Die intralogistischen Anwendungsmöglichkeiten sind beschränkt.

Eine weitere bekannte Anwendung eines Handhabungs-Fahrzeugs gemäß der EP 3 157 847 B1 ist in der Fig. 20 gezeigt. In diesem Fall fährt das Fahrzeug auf der Oberseite eines Regalblocks, um die Lagergüter vertikal als Stapel innerhalb von Regalen zu lagern. Die Stapel werden in den Regalen gebildet und gelagert. Das Fahrzeug kann nur das oberste Lagergut eines Stapels entnehmen. Das Fahrzeug kann sich horizontal in der Querrichtung und in der Längsrichtung oben auf dem Regal bewegen. Zu diesem Zweck weist das Fahrzeug zwei Radsätze auf. Die Radsätze sind ungelenkt. Für jede Fahrrichtung ist ein Radsatz vorgesehen. Die Radsätze können vertikal relativ zueinander bewegt werden, so dass immer nur ein Radsatz mit dem Regal in Kontakt ist, der dann die Fahrrichtung bestimmt.

Daher ist es eine Aufgabe der vorliegenden Offenbarung, ein verbessertes Lager- und Kommissionierkonzept vorzusehen, dessen Handhabungs-Fahrzeug kompakter ausgebildet ist und weitergehende Funktionsmöglichkeiten aufweist.

Diese Aufgabe wird gelöst durch ein Lager- und Kommissioniersystem gemäß jedem der Ansprüche 1 und 2, sowie durch ein Verfahren nach Anspruch 14.

Es wird also ein Handhabungs-Fahrzeug für Bodenlager mit gestapelten (Einheits-) Lagergütern bereitgestellt. Für einen (Fahr-)Richtungswechsel können alle (angetriebenen) Räder, insbesondere an Fahrspurkreuzungen, synchron, insbesondere um 90°, gedreht werden. Das Fahrzeug kann also innerhalb des Bodenlagers beliebige Lagerorte anfahren, ohne das Bodenlager, d.h. den Bereich, wo die gelagerten Stapel angeordnet sind, verlassen zu müssen.

Dennoch ist eine Lagerdichte (Anzahl von Lagergütern pro Flächeneinheit) hoch, wobei ein Durchsatz (Anzahl von Einlagerungen und/oder Auslagerungen pro Zeiteinheit) hoch ist.

Das Bodenlager benötigt keine Lagereinrichtungen. Die Struktur des Bodenlagers bzw. die Anordnung der Lagerorte lässt sich flexibel gestalten (hohe Planungsfreiheit) und leicht erweitern (Skalierbarkeit).

Außerdem können ergänzende Handhabungseinheiten, wie z.B. Portalroboter, zusätzlich eingesetzt werden, ohne die Funktionalität der Fahrzeuge einzuschränken.

Ferner ist es möglich, Schnittstellen für eine manuelle Interaktion zu schaffen, wobei keine zusätzlichen Schutzeinrichtungen (z.B. Zäune oder dergleichen) benötigt werden. Die Lagergüter können zum Beispiel manuell von oben in oben offene Fahrzeuge geladen werden.

Das Fahrzeug kann mehrere Ladegüter gleichzeitig anheben, absenken und horizontal transportieren.

Mit den Fahrzeugen können Lagergutstapel in einer gewünschten Sequenz gebildet werden. Dies bedeutet, es kann beliebig sequenziert werden.

Die Fahrzeuge können aber auch in klassischen Regalsystemen eingesetzt werden, wo die Lagergüter von oben gehandhabt werden (z.B. in einem "AutoStore"-System). Die Fahrzeuge sind also zu konventionellen Lagersystemen kompatibel.

Bei einer weiteren Ausgestaltung ist der Rahmen, vorzugsweise ausschließlich, in einem oberen, insbesondere obersten, vertikalen Bereich des Fahrzeugs angeordnet, wobei sich der Rahmen entlang einer Umfangsrichtung des Fahrzeugs erstreckt.

Da der Rahmen im oberen Bereich des Fahrzeugs angeordnet ist, können mehrere vertikal übereinander gestapelte Lagergüter gleichzeitig gehandhabt werden, weil unterhalb des Rahmens ausreichend Raum vorhanden ist.

Das Fahrzeug kann in beliebigen Richtungen durch die Stapel im Bodenlager verfahren werden, weil im unteren Bereich des Fahrzeugs keine Elemente des Rahmens zwischen den Beinen vorhanden sind, die gewisse Fahrrichtungen wegen möglichen Kollisionen ausschließen.

Insbesondere ist der Rahmen nach oben offen mit einer zentralen Öffnung ausgebildet, so dass die Stapel zentral durch das Fahrgestell hindurch über eine Oberseite des Fahrzeugs hinaus anhebbar sind.

Auf diese Weise können mehr Lagergüter gleichzeitig transportiert werden, als es durch eine maximal zulässige Stapelhöhe für gelagerte Lagergüter vorgegeben ist. Es können also mehr Lagergüter transportiert werden, als es durch eine Überfahrhöhe vorgegeben ist. Außerdem ist ein sukzessives Aufnehmen und sortiertes Aufnehmen möglich.

Insbesondere erhöhen sich dadurch die Sequenzierungsmöglichkeiten. Sequenzierungsvorgänge können schneller durchgeführt werden, da in der horizontalen Richtung weniger seitliche Umsetzvorgänge durchgeführt werden müssen, weil die Lagergüter nach oben über die eigentliche Höhe des Fahrzeugs hinaus bewegbar sind.

Vorzugsweise umfasst das Fahrzeug ferner einen Deckel, der eingerichtet ist, die zentrale Öffnung zu öffnen und zu schließen.

Der Deckel ermöglicht verschiedene Betriebsmodi. In einem ersten Modus ist die zentrale Öffnung offen. In einem zweiten Modus ist die zentrale Öffnung geschlossen. Im ersten Betriebsmodus lassen sich z.B. die oben erwähnten Sequenzierungsvorteile erzielen. Im zweiten Betriebsmodus können auf der Oberseite des Fahrzeugs weitere Lagergüter oder andere Objekte abgestellt werden.

Außerdem eröffnet die zentrale Öffnung einen Blick von oben auf die zu handhabenden Lagergüter, insbesondere während Transfervorgängen.

Bei einer Ausgestaltung sind jede der Fahreinheiten, die Hubeinheit und die Steuereinheit, sowie optional ein Energiespeicher, in ein Inneres des Fahrgestells integriert.

Durch diese Maßnahme baut das Fahrzeug kompakt. Die Komponenten des Fahrzeugs sind in das Fahrgestell integriert, so dass ausreichend Raum für die Handhabung der Lagergutstapel vorhanden ist. Die Komponenten sind nicht im Weg und stören die Handhabung der Lagergüter nicht.

Jede der Fahreinheiten weist ein Rad, ein Fahrantrieb und eine Lenkeinheit für das entsprechende Rad auf. Die Fahreinheiten in einem Inneren der Beine vorgesehen.

Weiter ist es von Vorteil, wenn jedes der Beine, vorzugsweise in seinem Inneren, mit einer der Fahreinheiten versehen ist und wenn insbesondere die Räder der Fahreinheiten vertikal relativ zu den Beinen beweglich sind, so dass eine Fahrrichtung des Fahrzeugs verstellbar ist, während das Fahrzeug auf den Beinen steht.

Die Räder können also synchron gedreht werden, wobei das Fahrzeug (ausschließlich) auf seinen Beinen steht, so dass beim Ändern der Fahrrichtung keine ungewollten Fahrzeugbewegungen auftreten können. Das Fahrzeug ist während der Fahrtrichtung stabilisiert.

Bei einer weiteren Ausgestaltung sind im Bodenlager Fahrspuren zwischen, insbesondere direkt, benachbart gelagerten Stapeln definiert, wobei die Fahrspuren vorzugsweise als Vertiefungen im Boden oder als Schienen auf dem Boden implementiert sind oder wobei die Fahrspuren insbesondere aufgeklebt oder aufgemalte Marker sind.

Bei einer weiteren besonderen Ausgestaltung sind die Lagergüter in Bezug auf ihr jeweiliges Außenmaß, insbesondere in Bezug auf ihre Grundfläche, vereinheitlicht.

Die Vereinheitlichung gewährleistet die Stapelbarkeit der Lagergüter in der vertikalen Richtung.

Vorzugsweise weist das Fahrzeug ferner eine Sensorik (d.h. einen oder mehrere Sensoren) auf, die eingerichtet ist, Codierungen zu erfassen, die am Boden und/oder an den Lagergütern angebracht sind. Insbesondere werden 2D-Codes benutzt.

Die Sensorik kann optisch, kapazitiv und/oder induktiv arbeiten.

Die Sensorik wird insbesondere zum Manövrieren des Fahrzeugs innerhalb des Bodenlagers und zum Identifizieren von Objekten und zum Bestimmen von Positionen des Fahrzeugs benutzt.

Bei einer weiteren Ausgestaltung weist das Bodenlager eine Vielzahl von stationären, bodenfixierten Markern auf, wobei jede der Marker derart auf dem Boden zur Lagerung eines der Stapel positioniert ist, dass das Fahrzeug sowohl in einer Längsrichtung des Bodenlagers als auch in einer Querrichtung des Bodenlagers jeden der Stapel überfahren kann.

Überfahren bedeutet in diesem Zusammenhang, dass das Fahrzeug genau über dem Stapel positionierbar ist, so dass der Stapel zentral in Bezug auf eine Grundfläche des Fahrzeugs positioniert ist.

Die bodenfixierten stationären Marker visualisieren zum einen die Fahrspuren und zum anderen die (Außengrenzen der) Lagerpositionen für die Lagergutstapel.

Insbesondere ist jeder der Marker ein optisch, kapazitiv oder induktiv erkennbarer Code, der vorzugsweise individualisiert ist.

Alternativ kann der Marker eine, vorzugsweise erhabene, Lagerplatte sein.

Insbesondere ist jeder der Codes in den Boden integriert oder auf dem Boden angebracht, vorzugsweise bei Kreuzungen der Fahrspuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in den Zeichnungen dargestellt und wird in der nachfolgenden Beschreibung näher erläutert. Es zeigen:
- Fig. 1: eine perspektivische Ansicht eines Lager- und Kommissioniersystems zu zwei Zeitpunkten, nämlich vor einem Anheben eines Lagerguts (Fig. 1A) und danach (Fig. 1B);
- Fig. 2: eine schematische Seitenansicht eines Fahrzeugs zur Veranschaulichung einer Integration von Fahrzeugkomponenten in das Fahrzeug;
- Fig. 3: eine schematische Darstellung eines Teils eines Fahrzeugbeins in einem angehobenen Zustand (Fig. 3A) und in einem abgesenkten Zustand (Fig. 3B);
- Fig. 4: eine schematische Seitenansicht eines Fahrzeugs mit einer Greifeinheit mit einem Lagergut (Fig. 4A) und ohne ein Lagergut (Fig. 4B), eine Draufsicht (Fig. 4C) auf das Fahrzeug und eine exemplarische Anwendung in einer schematischen Seitenansicht (Fig. 4D);
- Fig. 5: eine Seitenansicht zur schematischen Verdeutlichung eines Hubvorgangs;
- Fig. 6: eine schematische Seitenansicht eines Hubvorgangs, bei dem ein mehrere Lagergüter umfassender Stapel über eine Höhe des Fahrzeugs hinaus bewegt wird;
- Fig. 7: eine perspektivische Veranschaulichung eines teilweise dargestellten Beins inklusive einer (Fahr-)Sensorik;
- Fig. 8: eine perspektivische Veranschaulichung einer mechanischen Seitenführung für die Beine des Fahrzeugs mittels einer Schiene und einer Seitenführungsrolle;
- Fig. 9: verschiedene Möglichkeiten einer Positionierung und Ausrichtung einer Code-Leseeinrichtung in einer Seitenansicht (Fig. 9A-9C) und einer Draufsicht (Fig. 9D);
- Fig. 10: eine Seitenansicht eines Anwendungsbeispiels, bei dem die Code-Leseeinrichtung zur Positionsbestimmung des Fahrzeugs eingesetzt wird;
- Fig. 11: eine perspektivische Ansicht einer weiteren Ausgestaltung des Fahrzeugs mit einer zentralen (Durchgriffs-)Öffnung;
- Fig. 12: eine perspektivische Ansicht des Fahrzeugs der Fig. 11 in einem geschlossenen Zustand während einer Lagergutübergabe an einen Stetigförderer;
- Fig. 13: eine schematische Seitenansicht, bei dem zwei Fahrzeuge ein Lagergut in der vertikalen Richtung untereinander austauschen;
- Fig. 14: eine schematische Seitenansicht des Fahrzeugs zur Verdeutlichung unterschiedlicher Greifpositionen eines Lagerguts;
- Fig. 15: eine schematische Seitenansicht eines Systems, das nach einem Mehrebenenkonzept aufgebaut ist;
- Fig. 16: eine schematische Seitenansicht einer Abfolge von Zuständen (Fig. 16A-16H) zur Veranschaulichung eines Sequenzierungsvorgangs;
- Fig. 17: eine perspektivische Ansicht eines schematisch dargestellten Bodenlagers, das um einen Portalroboter ergänzt ist;
- Fig. 18: ein vorbekanntes Handhabungs-Fahrzeug in einer Außenumgebung;
- Fig. 19: ein vorbekanntes Handhabungs-Fahrzeug in einer Innenumgebung; und
- Fig. 20: eine perspektivische Ansicht eines vorbekannten Fahrzeugs, das auf einem Regal verfahren wird.

Die vorliegende Offenbarung betrifft ein Lager- und Kommissioniersystem 10, das nachfolgend auch kurz nur als "System" 10 bezeichnet wird. Das System 10 wird intralogistisch, vorzugsweise innerhalb von intralogistisch genutzten Gebäuden, eingesetzt.

Das System 10 weist ein Bodenlager 12 und mindestens ein (Handhabungs-)Fahrzeug 14 auf.

Unter dem Begriff "Bodenlager" ist ein Lagertyp zu verstehen, bei dem Lagereinheiten (Lagergut 18, ggf. inkl. Lagerhilfsmittel) ohne Lagereinrichtungen, wie z.B. Regale, (direkt) auf einem (Gebäude-)Boden 20 gelagert werden. Die Lagergüter 18 werden z.B. auf einem Gebäudeboden in vertikaler Richtung Y übereinandergestapelt und weisen insbesondere eine einheitliche Grundfläche auf, die wiederum eine Konfiguration von Fahrzeugbeinen 34 beeinflusst, wie es nachfolgend noch näher erläutert wird.

Im Bodenlager 12 der vorliegenden Offenbarung sind ein oder mehrere Stapel 16 aus mehreren vertikal übereinander angeordneten Lagergütern 18 lagerbar. Die Stapel 16 sind horizontal in der Längsrichtung X und senkrecht dazu in der Querrichtung Z des Bodenlagers 12 zueinander beabstandet und weisen ein Spaltmaß auf, das ein Fahren der Fahrzeuge 14 zwischen den Stapeln 16 hindurch erlaubt.

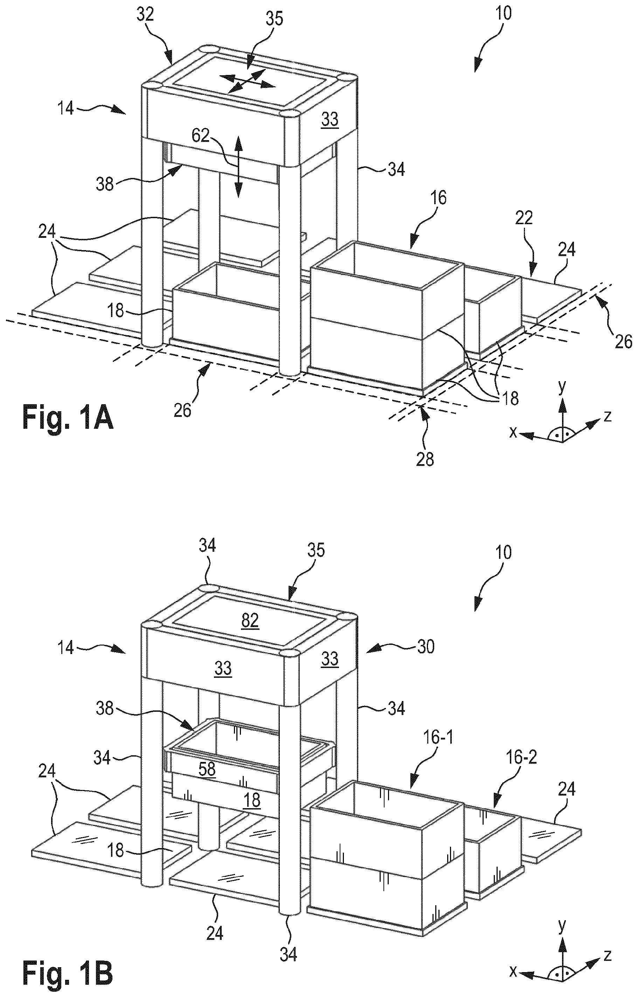

Die Stapel 16 werden durch mehrere vertikal übereinander angeordnete Lagergüter 18 definiert, wobei es im Betrieb vorkommen kann, dass der ein oder andere Stapel 16 durch ein Transferieren von Lagergütern 18 auf eine Anzahl von eins reduziert wird. Ferner ist es möglich, dass die Stapel 16 während ihres Aufbaus zu Beginn nur ein Lagergut 18 umfassen. In der Fig. 1A sind exemplarisch zwei Stapel 16 gezeigt, die jeweils (vorübergehend) nur ein Lagergut 18 umfassen.

Im Nachfolgenden werden (Lager-)Behälter als exemplarische (stapelbare) Lagergüter 18 gezeigt und beschrieben. Die Artikel (Lagereinheiten) selbst sind in den Figuren zur Vereinfachung der Erklärung nicht gezeigt. Es versteht sich, dass auch andere Lagerguttypen verwendet werden können, wie z.B. Paletten (Ladehilfsmittel), die mit z.B. mit Kartons (Lagereinheit) beladen sind. Das Bodenlager 12 kann gleichzeitig unterschiedliche Lagerguttypen bevorraten, wobei die Lagerguttypen aber vorzugsweise hinsichtlich ihrer Grundfläche vereinheitlicht sind. Generell gilt, dass unterschiedliche Grundflächen der Lagergüter 18 von unterschiedlichen Fahrzeugen 14 gehandhabt werden, die sich in diesem Fall in einer (räumlichen) Anordnung ihrer Beine 34 unterscheiden.

Bei den Lagergütern 18 kann es sich also z.B. um (Kunststoff-)Lagerbehälter, die zum Lagern von (hier nicht näher bezeichneten) Lagereinheiten (Artikel, Waren, Güter, Produkte und dergleichen, alles ohne Ladehilfsmittel, typenrein oder durchmischt) verwendet werden. Die Lagergüter 18 werden also durch Lagereinheiten mit und ohne Ladehilfsmittel realisiert. Die Lagergüter 18 sind vertikal übereinander stapelbar.

Die Stapel 16 werden direkt auf einem Boden 20 des Bodenlagers 12 gelagert. Die Stapel 16 sind vorzugsweise entlang eines (hier nicht näher bezeichneten) Rasters, vorzugsweise entlang einer gleichmäßigen rechtwinkligen Gitterstruktur, angeordnet. Lagerorte bzw. -positionen, die hier ebenfalls nicht näher bezeichnet sind, für die Stapel 16 können durch Marker 22 definiert sein.

In dem Beispiel der Fig. 1 sind die Marker 22 durch Lagerplatten 24 implementiert, die gegenüber dem Boden 20 erhaben sind und die die gleiche oder eine geringfügig abweichende Grundfläche wie die dort zu lagernden Lagergüter 18 aufweisen. Die Seitenränder der erhabenen Lagerplatten 24 stellen gleichzeitig eine mechanische (Seiten-)Führung für die Fahrzeuge 14 dar. Die Lagerplatten 24 visualisieren die (Stapel-)Lagerorte für Bedienpersonen. Die Lagerplatten 24 sind am Boden 20 fixiert, so dass sich ihre Position, d.h. der Lagerort, nicht während einer Interaktion mit einem der Fahrzeuge 14 ändert. Die Lagerplatten 24 sind also bodenfixiert.

Alternativ zu den optisch erkennbaren Lagerplatten 24 können die Lagerorte auch durch Marker 22 definiert werden, wie es nachfolgend noch näher erläutert werden wird. Diese Marker 22 müssen nicht zwingend visuell erkennbar sein. Es sind z.B. induktiv oder kapazitiv betriebene Marker 22 möglich, die auf dem Boden 20 angebracht sind oder auch in den Boden integriert sind, um dem Fahrzeug 14 eine Positionsbestimmung innerhalb des Bodenlagers 12 zu ermöglichen.

Die Marker 22 sind stationär und bodenfixiert vorgesehen, so dass die Stapel 18 immer wieder an den gleichen Lagerorten positioniert werden können.

Die exemplarischen Lagerplatten 24 der Fig. 1 sind in der horizontalen XZ-Ebene so zueinander beabstandet, dass ein (hier nicht näher bezeichnetes) Netzwerk von vorzugsweise rechtwinklig angeordneten Fahrspuren 26 definiert ist, so dass die Fahrzeuge 14 in der Längsrichtung X und/oder in der Querrichtung Z über jeden der Stapel 16 verfahrbar sind. Die Fahrspuren 26 definieren also ein gitterförmiges Netzwerk von möglichen Fahrwegen für die Fahrzeuge 14.

Die Fahrspuren 26 sind (in der Längsrichtung X und der Querrichtung Z) so breit, dass das Fahrzeug 14, wenn es einen der Stapel 16 überfahren hat, also zur Handhabung von Lagergütern 18 direkt über dem entsprechenden Stapel 16 positioniert ist, ausreichend Raum vorhanden ist, um frei zu agieren und um direkt angrenzende benachbarte Stapel 16 nicht zu berühren.

Die Fahrspuren 26 sind also bevorzugt entlang der Längsrichtung X und/oder entlang der Querrichtung Z orientiert. An ihren Schnittpunkten definieren die Fahrspuren 26 Kreuzungen 28.

Es versteht sich, dass die Fahrspuren 26 außerhalb des Bodenlagers 12, also z.B. in einem Bereich des Systems 10, wo keine Stapel 16 gelagert werden, von der (rechteckigen) Gitterstruktur abweichen dürfen. Außerhalb des Bodenlagers 12 können die Fahrspuren 26 z.B. auch bogenförmig als Kurven ausgebildet sein.

Alternativ zu den physisch vorhandenen Markern 22 können die Fahrspuren 26 und die Lagerorte der Stapel 16 auch nur datentechnisch in einer hier nicht näher gezeigten Systemsteuerung, die z.B. auch die Funktionen einer Lagerverwaltung, einer Auftragsverwaltung, einer Materialflusssteuerung und Ähnliches implementiert, in Form eines Layouts hinterlegt sein. Die Fahrzeuge 14 können in diesem Fall mit einem (lokalen) Positionsbestimmungssystem (z.B. GPS) ausgerüstet sein, um ihre Position innerhalb des Bodenlagers 12 zu bestimmen. In diesem Fall sind also weder die Fahrspuren 26 noch die Lagerorte der Stapel 16 visualisiert. In diesem Fall sind die Fahrspuren 26 und die Stapellagerorte virtuell definiert.

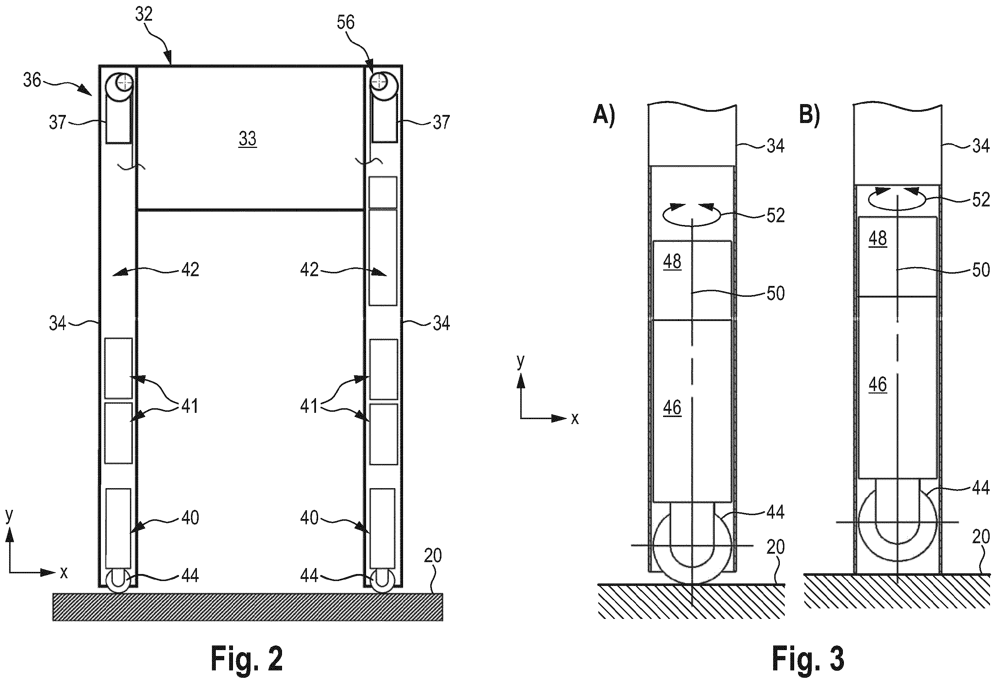

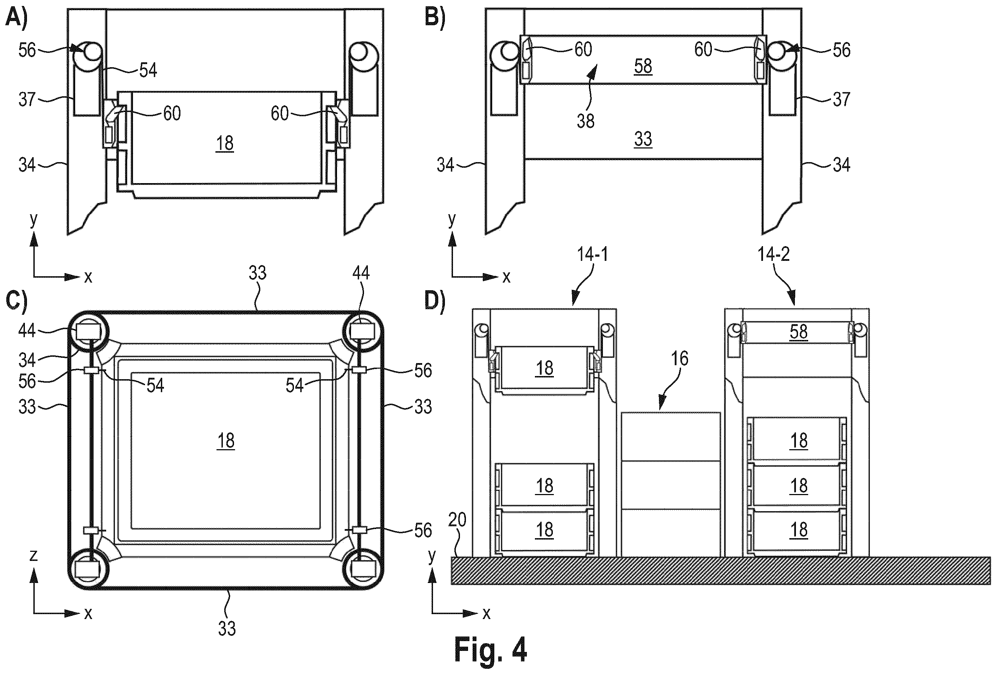

Das Fahrzeug 14 weist ein Fahrgestell 30, eine Hubeinheit 36, eine Greifeinheit 38, eine Fahreinheit 40 und eine Steuereinheit 42 auf. In der Fig. 1 sind nur das Fahrgestell 30 und die Greifeinheit 38 veranschaulicht. Die Hubeinheit 36 wird unter Bezugnahme auf Fig. 4 näher erläutert werden. Die Fahreinheit 40 wird unter Bezugnahme auf die Fig. 3 näher erläutert werden. Die Steuereinheit 42 wird unter Bezugnahme auf Fig. 2 näher erläutert werden.

Das Fahrgestell 30 umfasst einen Rahmen 32 und eine Vielzahl von Beinen 34.

Der Rahmen 32 ist in einem oberen Abschnitt des Fahrzeugs 14 angeordnet, so dass das Fahrzeug 14 die Stapel 16 sowohl in der Längsrichtung X als auch in der Querrichtung Z überfahren kann, ohne mit den Stapeln 16 zu kollidieren. Die Stapel 16 bestehen üblicherweise aus mehreren vertikal übereinander angeordneten Lagergütern 18.

Der Rahmen 32 wird vorzugsweise durch eine Vielzahl von Seitenwänden 33 definiert, die einen (hier nicht näher bezeichneten) Körper entlang einer Umfangsrichtung (d.h. um die Vertikalachse Y herum) bilden. Die Seitenwände 33 sind vorzugsweise innen hohl, um Funktionskomponenten des Fahrzeugs 14 aufzunehmen, wie es nachfolgend noch näher erläutert wird.

Der Rahmen 32 verbindet die Vielzahl der Beine 14. Im Beispiel der Fig. 1 sind vier Beine 34 vorgesehen. Es versteht sich, dass auch mehr als vier Beine 34 vorgesehen werden können. Es müssen mindestens drei Beine 34 vorgesehen sein.

Die Beine 34 erstrecken sich im Wesentlichen entlang der vertikalen Richtung Y. Die Beine 34 sind vorzugsweise alle identisch ausgebildet. Die Beine 34 weisen eine (vertikale) Höhe auf, die es ermöglicht, dass das Fahrzeug 14 die Stapel 16 kollisionsfrei in der Längsrichtung X und der Querrichtung Z überfahren kann.

In der Fig. 1 sind die Beine 34 in der horizontalen Richtung rechtwinklig zueinander angeordnet. Die Beine 34 sind in der Längsrichtung X und der Querrichtung Z in Übereinstimmung mit der Teilung des Netzwerkes aus Fahrspuren 26 in der entsprechenden Richtung beabstandet. Dies bedeutet mit anderen Worten, dass die Beine 34 des Fahrzeugs 14 so relativ zueinander positioniert sind, dass das Fahrzeug 14 über einen (oder mehrere) der Stapel 16 bewegt werden kann, so dass sich der bzw. die Stapel 16 mittig zwischen den Beinen 34 befinden, wie es in der Fig. 1 gezeigt ist.

Die (horizontalen) Bewegungsmöglichkeiten des Fahrzeugs 14 entlang der Längsrichtung X und der Querrichtung Z sind in der Fig. 1 durch Pfeile 35 angedeutet.

Fig. 2 zeigt eine teilweise transparente Seitenansicht eines schematisch dargestellten Fahrzeugs 14, wie es z.B. in der Fig. 1 zum Einsatz kommt. Die Hubeinheit 36 ist im vertikal oberen Abschnitt des Fahrzeugs 14, vorzugsweise im obersten Abschnitt des Fahrzeugs 14, vorgesehen. Die Hubeinheit 36 umfasst ein oder mehrere Hubantriebe 37 und (hier nicht näher bezeichnete Zug- bzw. Hubmittel, wie z.B. (Draht-) Seile, Flachbänder oder Ähnliches, die über hier nicht näher bezeichnete Umlenkelemente, wie z.B. Umlenkrollen, geführt sein können und die mit z.B. mit Seil- oder Bandtrommeln 56 der Hubantriebe 34 verbunden sind. In Fig. 4 sind jeweils zwei Seile 54 mit jeweils einer Seiltrommel 56 und diese mit den Hubantrieben 37 über eine gemeinsame Achse (nicht näher gezeigt und bezeichnet) verbunden.

Im Beispiel der Fig. 2 ist die Hubeinheit 36 mehrteilig, insbesondere zweiteilig, ausgebildet. Die Hubeinheit 36 ist vorzugsweise in die Beine 34 und/oder Seitenwände 33 integriert, die zu diesem Zwecke innen hohl ausgebildet sind und insbesondere eine Dicke entsprechend den Beinen 34 aufweisen. Im Beispiel der Fig. 2 ist die Hubeinheit 36 in die Beine 34 und die Seitenwände 33 integriert, die sich in der Fig. 1 entlang der Querrichtung Z erstrecken.

Die Fahreinheit 40 ist bevorzugt ebenfalls mehrfach vorgesehen und in die Beine 34 integriert. Die Fahreinheit 40 wird vorzugsweise in einem unteren Abschnitt des Fahrzeugs 14 angeordnet, der dem Boden 20 direkt gegenüberliegt. Weitere Details der Fahreinheit 40 werden unter Bezugnahme auf Fig. 3 noch näher erläutert werden.

Des Weiteren umfasst das Fahrzeug 14 eine ein- oder mehrteilige Steuereinheit 42, die ebenfalls in das Fahrgestell 30 integriert ist. Im Beispiel der Fig. 2 ist die Steuereinheit 42 in eines der rechten Beine 34 integriert. Es versteht sich, dass die Steuereinheit 42 auch in jedes andere Bein 34 oder in die Wände 33 integriert werden kann.

Die Steuereinheit 42 ist mit den anderen Aktuatoren und (hier nicht näher dargestellten) Sensoren über eine Kommunikationseinrichtung (z.B. Interface) verbunden, um Signale zu empfangen, zu verarbeiten und auszugeben. Die Steuereinheit 42 kann das oben erwähnte (lokale) Positionsbestimmungssystem umfassen, wobei insbesondere auch eine Kommunikationsschnitte zum, vorzugsweise drahtlosen, Datenaustausch mit der (nicht dargestellten) Systemsteuerung vorgesehen ist.

Die Steuereinheit 42 erzeugt Steuersignale für die Fahreinheit 40, um das Fahrzeug 14 horizontal zu bewegen. Die Steuereinheit 42 erzeugt Steuersignale für die Hubeinheit 36, um Lagergüter 18 anzuheben oder abzusetzen. Die Steuereinheit 42 erzeugt Steuersignale für die Greifeinheit 38, um Lagergüter 18 zu greifen oder freizugeben.

Des Weiteren kann das Fahrzeug 14 einen oder mehrere Energiespeicher 41 aufweisen, um die Aktuatoren 36, 38 und 40 sowie die Sensoren mit Energie zu versorgen. Die Energiespeicher 41 sind vorzugsweise ebenfalls in das Fahrgestell 30, und insbesondere in die Beine 34, integriert.

Die Greifeinheit 38 ist in Fig. 2 nicht gezeigt und wird nachfolgend noch näher erläutert werden.

Fig. 3 zeigt eine Teilansicht eines Beins 34 mit einer integrierten Fahreinheit 40, wie sie in den Fig. 1 und 2 eingesetzt werden kann.

Vorzugsweise ist jedes der Beine 34, unabhängig von der Anzahl der Beine 34, mit einer eigenen Fahreinheit 40 versehen. Man spricht in diesem Fall von einem aktiv angetrieben Bein 34.

Jede der Fahreinheiten 40 umfasst ein Rad 44, einen Fahrantrieb 46 und eine Lenkeinheit 48.

Es versteht sich, dass nicht jedes der Beine 34 mit einer der (aktiven) Fahreinheiten 40 versehen sein muss. Es ist auch möglich, einige der Beine 34 mit einem Rad 44 zu versehen, das lose dreht, d.h. nicht angetrieben ist. Die nicht angetriebenen Räder 44 sind auch lose drehend um die Lenkachse 50 gelagert, die sich parallel zur Längsrichtung der Beine 34, d.h. parallel zur vertikalen Richtung Y, erstreckt.

Die Lenkeinheiten 48 der (aktiven) Fahreinheiten 40 sind eingerichtet, die zugehörigen Räder 44 (aktiv) um die Lenkachse 50 zu drehen. In Fig. 3B ist die entsprechende Schwenkrichtung durch einen Pfeil 52 angedeutet. Auf diese Weise wird eine neue Fahrrichtung des Fahrzeugs 14 eingestellt.

Die Lenkeinheit 48 veranlasst z.B., dass das Rad 44 parallel zur Längsrichtung X oder zur Querrichtung Z ausgerichtet wird, um das Fahrzeug 14 in den gewünschten Richtungen entlang der Fahrspuren 26 (vergleiche Fig. 1) zu bewegen. Die verschiedenen Bewegungsrichtungen sind in der Fig. 3B wiederum durch die Pfeile 35 angedeutet.

Eine Änderung der Fahrrichtung des Fahrzeugs 14 innerhalb des Bodenlagers 12 wird vorzugsweise im Stand durchgeführt, d.h. in einem Fall, wo sich das Fahrzeug 14 nicht bewegt, d.h. in der horizontalen Richtung nicht verfahren wird. Die Richtung kann geändert werden, während eine Hubbewegung stattfindet.

Nach einem Aspekt der erfindungsgemässen Ausgestaltung der Fahreinheiten 40 können die Räder 44 in das Innere der Beine 34 über einen hier nicht näher gezeigten und bezeichneten Mechanismus eingefahren werden. Alternativ können die Beine 34 abgesenkt werden.

Die Fig. 3A zeigt einen ausgefahrenen Zustand der Räder 44. Die Fig. 3B zeigt den eingefahrenen Zustand. Im eingefahrenen Zustand steht das Fahrzeug 14 im Wesentlichen direkt auf den Beinen 34 und nicht auf den Rädern 44. Dies bedeutet, dass die Richtungsänderung in einem unbelasteten Zustand der Räder 44 durchgeführt werden kann. Das Fahrzeug 14 steht dann stabil auf seinen Beinen 34. Auf diese Weise kann auch sichergestellt werden, dass die Fahrzeuge 14 exakt entlang der Fahrspuren 26 bewegt werden, insbesondere wenn die Fahrspuren 26 rechtwinklig zueinander orientiert sind und die Räume zwischen den Stapeln 16 sehr eng sind. Dies bedeutet mit anderen Worten, dass das Fahrzeug innerhalb des Bereichs des Bodenlagers 12 keine Kurven fährt und somit keine Kollisionsgefahr besteht.

Das Fahrzeug 14 kann beliebig innerhalb des Bodenlagers 12 verfahren werden. Das Fahrzeug 14 muss das Bodenlager 12 nicht verlassen, um einen Richtungswechsel einzuleiten.

Dies gilt natürlich auch für Ausgestaltungen der Fahreinheiten 40, bei denen die Räder 44 nicht einziehbar sind.

Ferner versteht es sich, dass die Lenkeinheit 48 eingerichtet ist, die Räder 44 hinsichtlich ihrer Orientierung so zu verstellen, dass die Räder 44 den Fahrspuren 26 folgen können. Im Beispiel der Fig. 2 bedeutet dies, dass die Lenkeinheit 48 dazu eingerichtet ist, die Räder 44 innerhalb des Bodenlager 12 um im Wesentlichen mindestens 90° zu drehen. Es versteht sich, dass das Netzwerk der Fahrspuren 26 nicht zwingend rechtwinklig aufgebaut sein muss, so dass andere Winkel ebenfalls denkbar sind.

Der Fahrantrieb 46 ist eingerichtet, die Räder 44 anzutreiben, um das Fahrzeug 14 in der eingestellten Richtung zu bewegen. Der Fahrantrieb 46 ist mit den Rädern 44 verbunden. Der Fahrantrieb 46 ist auch mit einer Energiequelle, wie z.B. dem Energiespeicher 41, verbunden. Ferner ist der Fahrantrieb 46 mit der Steuereinheit 42 verbunden, um entsprechende Fahrbefehle zu empfangen.

Die Lenkeinheit 48 ist ebenfalls mit der Energiequelle und der Steuereinheit 42 verbunden.

Es versteht sich, dass die Fahreinheiten 40 innerhalb des Bodenlagers 12 im Allgemeinen synchronisiert betrieben werden. Dies bedeutet, dass die Fahreinheiten 40 von der Steuereinheit 42 so angesteuert werden, dass das Fahrzeug 14 im Bodenlager 12 entlang der (geraden) Fahrspuren 26 bewegt wird.

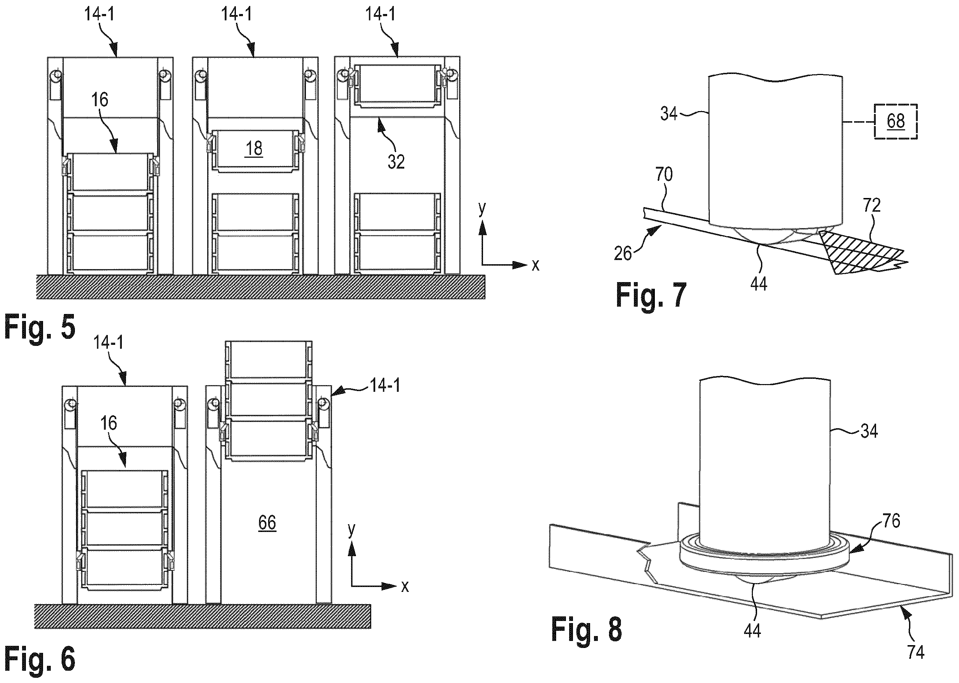

Außerhalb des Bodenlager 12 kann das Fahrzeug 14 z.B. auch spurgeführt (siehe auch Fig. 7) oder frei navigieren. Insbesondere kann in diesem Fall ein grösser Lenkwinkel, im Wesentlichen ca. +/-90°, zweckmäßig sein. Das Fahrzeug 14 könnte außerhalb des Bodenlagers 12 auch diagonal verfahren oder auf der Stelle drehen.

Fig. 4 dient zur Veranschaulichung der Greifeinheit 38 (Fig. 4A und Fig. 4B) sowie der Relativpositionierung der Hubeinheit 36 und der Greifeinheit 38 (Fig. 4C). Fig. 4D veranschaulicht ein Zusammenwirken von zwei horizontal benachbart positionierten Fahrzeugen 14.

Die Fig. 4A und 4B zeigen Seitenansichten des oberen Abschnitts eines Fahrzeugs 14, wobei man (auch) in das Innere des Fahrzeugs 14 blickt. In den beiden Beinen 34 sind die Hubantriebe 37 angedeutet, die Seile 54 antreiben, die über Umlenkrollen geführt sind oder auf Seil- oder Bandtrommeln 56 gewickelt sind und die mit den Hubantrieben 37 verbunden sind. Im Beispiel der Fig. 4 sind vier Seile 54 vorgesehen, die in der Nähe der Beine 34 angeordnet sind (vergleiche Draufsicht der Fig. 4C). An ihrem gegenüberliegenden Ende, das von den Hubantrieben 37 abgewandt ist, sind die Seile 54 mit einem (umlaufenden) Greifrahmen 58 verbunden.

Eine Kontur des Greifrahmens 58 ist in der Draufsicht (vgl. Fig. 4C) an eine Kontur der Lagergüter 18 angepasst. Alternativ kann auf einen Rahmen verzichtet werden, so dass Greifer direkt an die Seile 54 koppeln. Der Rahmen hat aber den Vorteil, dass er die Stabilität der Greifeinheit 38 erhöht. Außerdem kann der Rahmen seitlich vertikal an den Lagergütern 18 eines Stapels 16 vorbeibewegt werden.

Alternativ zu den Seilen 54 können auch andere Hubmittel vorgesehen werden, wie z.B. Bänder. Es können mehr oder weniger als vier Hubmittel eingesetzt werden. Die Hubmittel sind vorzugsweise zur Übertragung von Energie an schaltbare Sperrglieder bzw. Greifer (Finger) eingerichtet.

Exemplarische Finger 60 sind in den Seitenansichten der Fig. 4A und Fig. 4B gezeigt. Die Finger 60 sind in den Greifrahmen 58 integriert. In der Fig. 4A sind die Finger 60 in einem Sperrzustand gezeigt, in welchem die Finger 60 in Eingriff mit (hier nicht näher bezeichneten) seitlichen Ausnehmungen 90 in den Lagergütern 18 sind, um die Lagergüter 18 in einer vertikalen Richtung Y (vergleiche Pfeil 62 in Fig. 1) zu bewegen. In der Fig. 4A sind nicht alle Elemente des Greifrahmens 58 gezeigt, um einen Blick auf das angehobene Lagergut 18 nicht zu versperren. In der Fig. 4B sind die Finger 60 in einem Zustand gezeigt, in welchem der Greifrahmen 58 in der vertikalen Richtung Y kollisionsfrei an einem oder mehreren Lagergütern 18 vorbeibewegt werden kann.

Fig. 4A zeigt einen Hub- oder Senkvorgang, bei dem das in Eingriff befindliche Lagergut 18 angehoben oder abgesenkt wird. Die Fig. 4D zeigt für das links dargestellte Fahrzeug 14-1 die gleiche Situation wie Fig. 4A. Das rechts in der Fig. 4D gezeigte zweite Fahrzeug 14-2 dient zur Veranschaulichung des Greifrahmens 58 in einem angehobenen Zustand, ohne jedoch ein Lagergut 18 zu greifen, analog zur Situation, die in der Fig. 4B dargestellt ist. Die Fig. 4D veranschaulicht außerdem, dass mehrere Fahrzeuge 14 gleichzeitig im Bodenlager 12 (vergleiche Fig. 1) betrieben werden können. Die in der Fig. 4D für die Längsrichtung X veranschaulichte Situation gilt natürlich analog für die Querrichtung Z.

Fig. 5 dient zur Veranschaulichung eines Hubvorgangs, der von einem (einzigen) Fahrzeug 14 durchgeführt wird, wobei ein exemplarischer Lagerbehälter von einem Stapel 16 abgehoben wird. Die Fig. 5 zeigt eine Seitenansicht, wobei man in das Innere des Fahrzeugs 14 blickt. Eine zeitliche Abfolge des Hubvorgangs ergibt sich in der Fig. 5 von links nach rechts. Es ist immer wieder das gleiche Fahrzeug 14, nur zu unterschiedlichen Zeitpunkten (von links nach rechts), gezeigt.

Zu Beginn des Hubvorgangs (links in Fig. 5) wird der (hier nur teilweise dargestellte) Greifrahmen 58 in der vertikalen Richtung Y auf die Höhe des obersten Lagerbehälters abgesenkt. Der Stapel 16 umfasst exemplarisch drei vertikal übereinander angeordnete Lagerbehälter. Die Finger 60 werden ausgefahren, um den obersten Behälter zu greifen. Anschließend werden die Hubantriebe 37 betätigt. Das Hubmittel (Seil 54) wird eingezogen, so dass sich der oberste Behälter mit dem Greifrahmen 58 nach oben bewegt (mittlere Darstellung in Fig. 5), bis der Lagerbehälter in einer oberen Position innerhalb des Fahrzeugs 14 ankommt (rechte Darstellung in Fig. 5).

Sobald der oberste Behälter vom Stapel 16 abgehoben ist (mittlere und rechte Darstellung in Fig. 5) kann das Fahrzeug 14 in der horizontalen Richtung, d.h. in der Längsrichtung X und/oder in der Querrichtung Z bewegt werden. Die Fahrt des Fahrzeugs 14 ist sicher, wenn der Behälter in der obersten Position (rechte Darstellung in Fig. 5) angekommen ist, weil dann eine Kollision mit anderen Stapeln 16, die ebenfalls maximal drei Lagerbehälter umfassen dürfen, sicher ausgeschlossen ist. Im Zwischenzustand gemäß der mittleren Darstellung in Fig. 5 kann das Fahrzeug 14 zwar ebenfalls verfahren werden. In diesem Fall ist eine Kollision aber nicht sicher ausgeschlossen.

Fig. 6 dient ebenfalls zur Veranschaulichung eines Hubvorgangs. Im Unterschied zur Fig. 5 wird in der Fig. 6 der vollständige Stapel 16 mit allen Lagerbehältern gleichzeitig angehoben.

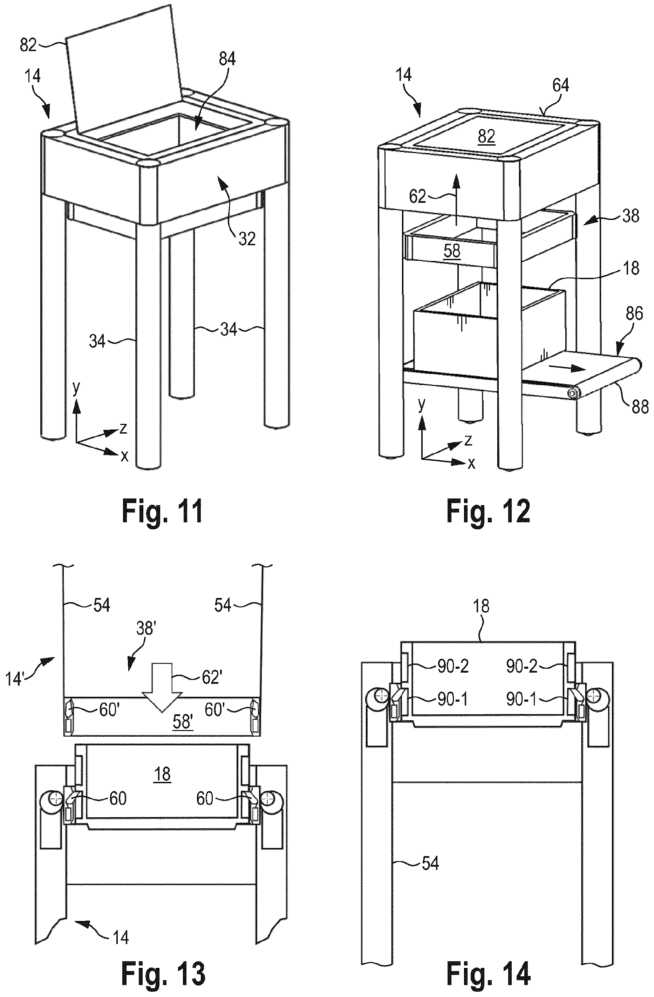

Die Fig. 6 dient ferner zur Veranschaulichung, dass der Stapel 16 über eine Oberseite 64 des Fahrzeugs 14 hinausbewegt werden kann (rechte Darstellung in Fig. 6). Der Stapel 16 durchgreift die Oberseite 64 des Fahrzeugs 14. In diesem Fall ist der Rahmen 32 - und somit auch das Fahrgestell 30 allgemein - nach oben offen, wie es unter Bezugnahme auf Fig. 11 - 14 noch näher erläutert werden wird.

Es versteht sich, dass die Stapel 16 allgemein durch eine beliebige Anzahl von vertikal übereinander gestapelten Lagergütern 18 gebildet werden kann. Eine Höhe der Beine 34 ist so gewählt, dass ein Freiraum 66 (vergleiche Fig. 5 und 6) unterhalb des Rahmens 32 zur sicheren Aufnahme der Stapel 16 ausreicht. Vorzugsweise wird vorab eine maximal zulässige Höhe der Stapel 16 definiert.

Die Fig. 7 und 8 dienen zur Veranschaulichung einer Sensorik 68, die für eine Führung (und Positionierung) der Fahrzeuge 14 entlang der Fahrspuren 26 eingesetzt werden kann. Unter dem Begriff "Sensorik" ist insbesondere die Anwendung von Sensoren zur Identitäts- und/oder Positionsbestimmung der Lagergüter 18 und zur Positionsbestimmung des Fahrzeugs 14 zu verstehen.

Die Fig. 7 und 8 zeigen exemplarisch jeweils nur einen Teil eines Beins 34 eines Fahrzeugs 14 und dienen ferner der Veranschaulichung einer (nicht näher bezeichneten) Spurführung. Fig. 7 veranschaulicht eine elektronische Spurführung. Fig. 8 veranschaulicht eine mechanische Spurführung.

In der Fig. 7 ist die Fahrspur 26 durch eine farbliche Markierung 70 (in der Fig. 7 grau dargestellt) auf dem Boden 20 des (nicht gezeigten) Bodenlagers 12 implementiert. Die Markierung 70 kann auf dem Boden 20 aufgemalt sein. Die Markierung 70 kann auf den Boden geklebt sein. Die Markierung 70 stellt einen Kontrast zwischen der Fahrspur 26 und dem restlichen Boden 20 des Bodenlagers 12 dar.

Die Markierung 70 kann alternativ auch durch einen RFID-Tag oder einen NFC-Tag implementiert werden, die mit entsprechenden Sensoren gelesen werden.

Im Beispiel der Fig. 7 ist die Sensorik 68 durch eine hier nicht näher gezeigte und bezeichnete Optik implementiert, die die Markierung 70 optisch liest und erkennt. Ein Sichtfeld des entsprechenden Sensors ist in der Fig. 7 mit 72 bezeichnet.

Alternativ zur elektronischen Spurführung können mechanische Komponenten eingesetzt werden.

In der Fig. 8 ist eine mechanische Alternative gezeigt. Die Fahrspur 26 ist durch eine Schiene 74 implementiert. Die Schiene 74 ist oben offen und so dimensioniert, dass die Beine 34 darin zwangsgeführt bewegt werden können. Die Beine 34 können zu diesem Zweck z.B. mit einer, vorzugsweise ballig oder konisch ausgebildeten, Rolle 76 versehen sein, die eine Seitenführung übernimmt.

Die Schiene 74 weist z.B. einen U-förmigen Querschnitt auf. Die Führungsrolle 76 ist so gelagert, dass sie um die vertikale Achse Y, d.h. also außen um die Längsrichtung des Beins 34, drehbar gelagert ist. Die Rolle 76 ist an einem unteren Ende der Beine 34 in einer Höhe angeordnet, so dass die Rolle 34 mit den hier nicht näher bezeichneten Seitenwänden des U-Profils wechselwirken kann.

Es versteht sich, dass die Schiene 74 im Bereich der Kreuzungen 28 (vergleiche Fig. 1) keine Seitenwände aufweist.

Die Schiene 74 kann auf dem Boden 20 fixiert werden, so dass sie aus dem Boden 20 vertikal hervorsteht. Die Schiene 74 kann alternativ formschlüssig im Boden aufgenommen werden, so dass die Seitenwände der Schiene 74 bündig mit dem Boden 20 nach oben abschließen. Die Seitenwände können auch durch die Außenränder der Lagerplatten 24 gebildet werden (vgl. z.B. Fig. 1).

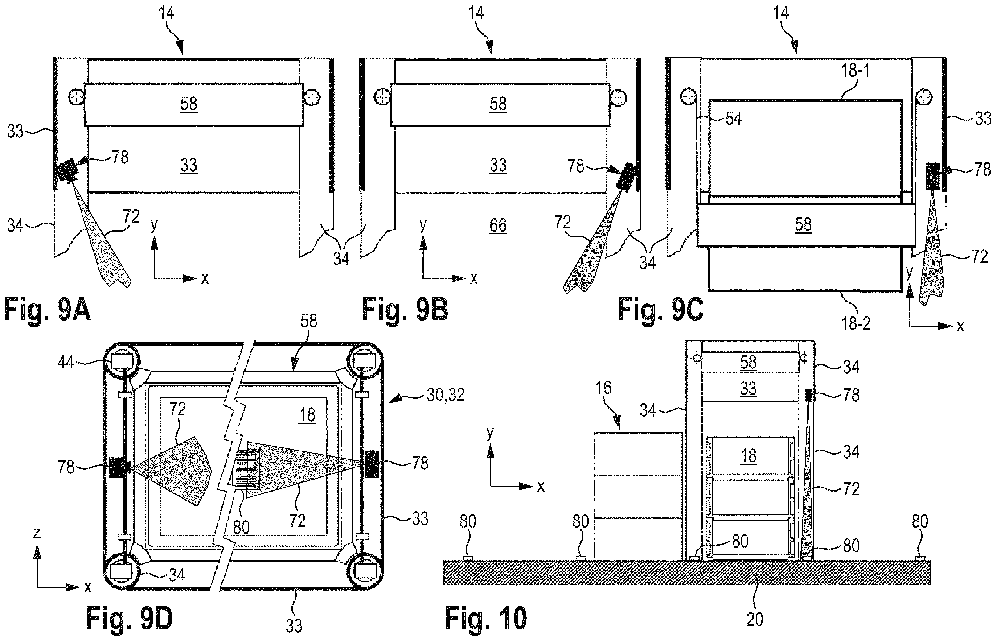

Fig. 9 zeigt eine weitere Ausgestaltung der Sensorik 68 (vergleiche Fig. 7) des Fahrzeugs 12, wobei die Sensorik 68 in diesem Fall im Wesentlichen zum Identifizieren der Lagergüter 18 eingesetzt wird.

Die Fig. 9A bis 9C zeigen seitliche Teilansichten eines schematisch dargestellten Fahrzeugs 14, das mit einem Sensor 78 (z.B. Barcode-Scanner oder Kamera) versehen ist. Der Sensor 78 kann eine Code-Leseeinrichtung sein und stellt eine (weitere) mögliche Implementierung der Sensorik 68 dar. Die Kamera kann auch andere optische Identifizierungsmerkmale wie z.B. einen Text oder Ähnliches auf dem Behälter, oder die Artikel selbst in nach oben offenen Behältern nutzen.

Die Fig. 9A bis 9C zeigen, dass die Sensorik 68 an unterschiedlichen Orten - auch verteilt - und mit unterschiedlichen Ausrichtungen am Fahrzeug 14 vorgesehen sein kann. In der Fig. 9A ist die Code-Leseeinrichtung 78 (Kamera) im Bereich der linken Seitenwand 33 vorgesehen und schräg nach innen in Richtung des (nicht dargestellten) Bodens 20 ausgerichtet, um ein (optisches) Identifizierungsmerkmal, wie z.B. einen 2D-Code 80, eines (nicht dargestellten) Lagerguts 18 erfassen zu können. Eine Größe und Ausrichtung eines Sichtfelds 72 der Code-Leseeinrichtung 78 ist vorzugsweise so gewählt, dass z.B. der 2D-Code 80 des Lagerguts 18 sicher lesbar ist, und zwar unabhängig von einer (Stapel-)Höhe, auf welcher sich das zu handhabende Lagergut 18 aktuell befindet. Der 2D-Code 80 kann an unterschiedlichen Stellen (Deckel, Boden, Seitenwand, etc.) am Behälter positioniert sein.

Es versteht sich, dass der Code 80 nicht nur optisch implementiert sein kann. Der Code 80 könnte auch in Form von z.B. RFID-Tags oder NFC-Tags implementiert sein.

Generell gilt, dass der Sensor 78 bzw. die Code-Leseeinrichtungen 78 beweglich gelagert sein können, um - z.B. in Abhängigkeit von ihrer Anwendung (Identifizieren der Lagergüter 18, Identifizieren der Fahrspuren 26, etc.), in Abhängigkeit von einer zu erwartenden Position des 2D-Codes 80 am Lagergut 18 und in Abhängigkeit von den Lagergutabmessungen - die entsprechenden 2D-Codes 80 auch sicher erkennen zu können. In der Fig. 9 ist die Code-Leseeinrichtung 78 um z.B. die Z-Achse (aktiv) schwenkbar gelagert.

In der Fig. 9B ist die Code-Leseeinrichtung 78 an einem anderen Ort als in Fig. 9A angeordnet. In der Fig. 9Bb ist die Code-Leseeinrichtung 78 im Bereich der rechten Seitenwand 33 angeordnet.

Fig. 9C zeigt die gleiche Ausgestaltung wie Fig. 9B. In der Fig. 9C ist aber eine andere Arbeitssituation gezeigt (vgl. auch Fig. 10). Die Code-Leseeinrichtung 78 der Fig. 9B wurde so um die Z-Achse gedreht, dass ihr Sichtfeld 72 im Wesentlichen senkrecht nach unten, d.h. parallel zur vertikalen Richtung Y orientiert ist. Mit dieser Ausrichtung kann die Code-Leseeinrichtung 78 zum Identifizieren der Fahrspur 26 benutzt werden, wie es bereits im Zusammenhang mit der Fig. 7 erläutert wurde. In diesem Fall ist die Fahrspur 26 vorzugsweise auch durch 2D-Codes 80 gekennzeichnet, die entlang des Rasters (vorzugsweise mit konstanter Teilung) und insbesondere an den Kreuzungen 28 (vergleiche Fig. 1) auf dem Boden 20 angeordnet sind. Fig. 10 zeigt die entsprechende Anwendungssituation in einer Seitenansicht.

Die Möglichkeit, die Ausrichtung der Code-Leseeinrichtung 78 durch eine Bewegung zu ändern, hat den Vorteil, dass die gleiche Sensorik 68 zum Identifizieren der Lagergüter 18 und der Fahrspuren 26 verwendet werden kann. Fig. 9C zeigt den Greifrahmen 58 des Fahrzeugs 14 in einem Zustand, in welchem mehrere Lagergüter 18 des Stapels 16 angehoben sind. In der Fig. 9C sind exemplarisch zwei Lagergüter 18-1 und 18-2 in dem angehobenen Zustand gezeigt. In diesem Zustand wäre die Code-Leseeinrichtung 78 nutzlos, wenn sie weiterhin wie in der Fig. 9B ausgerichtet wäre. Deshalb wird die Ausrichtung der Code-Leseeinrichtung 78 geändert, so dass die Code-Leseeinrichtung 78 eine andere Funktion ausführen kann.

Fig. 9D zeigt eine Draufsicht auf das Fahrzeug 14 analog zu den Fig. 9A bis 9C und veranschaulicht mögliche Positionen der Code-Leseeinrichtungen 78 in Bezug auf das Fahrgestell 30 bzw. den Rahmen 32 des Fahrzeugs 14. Ferner ist die generelle Möglichkeit veranschaulicht, dass mehrere Code-Leseeinrichtungen 78 gleichzeitig eingesetzt werden können. Exemplarisch sind zwei Code-Leseeinrichtungen 78 gezeigt, die z.B. im Bereich der linken und rechten Seitenwände 33 angeordnet sind. Es versteht sich, dass die Code-Leseeinrichtungen auch im Bereich der anderen Seitenwände 33 und/oder im Bereich der Beine 34 angeordnet sein könnten.

Die Code-Leseeinrichtung 78 kann alternativ auch beweglich in einer Führung gelagert sein, die sich in Umfangsrichtung um den Rahmen 32 herum erstreckt, so dass der entsprechende Sensor immer auf die Seite des Fahrzeugs 14 bewegt werden kann, wo der Sensor benötigt wird.

Fig. 11 zeigt eine weitere, generell mögliche Abwandlung (Deckel) des Fahrgestells 30 und insbesondere des Rahmens 32, der wiederum im oberen, insbesondere obersten, (Vertikal-)Bereich des Fahrzeugs 14 angeordnet ist. Allgemein erstreckt sich der Rahmen 32 im Wesentlichen in einer Umfangsrichtung des Fahrzeugs 14, d.h. um die Vertikalrichtung Y herum.

Es versteht sich, dass die in den bisherigen Figuren gezeigte rechteckige Grundform des Rahmens 32 modifiziert werden kann. Möglich sind auch polygonale Grundformen oder Grundformen mit einer Krümmung (Kreis, Ellipse, etc.).

In der Fig. 11 weist das Fahrgestell 30 zusätzlich einen Deckel 82 auf. Im Beispiel der Fig. 11 ist der Deckel 82 um die Z-Achse schwenkbar links an der Oberseite 64 des Fahrzeugs 14 angelenkt.

Der Deckel 82 könnte an jeder anderen Seite des Fahrzeugs 14 vorgesehen sein.

Der Deckel 82 könnte alternativ lose eingelegt sein, d.h. keine feste Verbindung mit dem Rahmen 32 haben.

Der Deckel 82 ist an die Form des Rahmens 32 angepasst und verschließt eine zentrale Öffnung 84, deren Form durch den Rahmen 32 (in der Draufsicht) definiert ist. Die zentrale Öffnung 84 ist so dimensioniert, dass die Lagergüter 18 vertikal durch den Rahmen 32 hindurch bewegt werden können, wie es in der Fig. 6 bereits gezeigt ist.

In einem geschlossenen Zustand, der in der Fig. 12 gezeigt ist, verschließt der Deckel 82 die Öffnung 84, so dass die Oberseite 64 des Fahrzeugs 14 eine geschlossene Fläche bildet. Zum manuellen Öffnen des Deckels 80 und für einen Zugriff auf Waren in einem darunter befindlichen Behälter kann z.B. auch eine elektronische Verriegelung vorgesehen sein, so dass lediglich ein autorisierter Zugriff möglich ist.

Fig. 12 dient ferner zur allgemeinen Veranschaulichung einer Interaktion der Fahrzeuge 14 mit einem Stetigförderer 86, der in der Fig. 12 exemplarisch als Förderband 88 implementiert ist. Es versteht sich, dass andere Förderertypen (Kettenförderer, Rollenförderer, Hängeförderer, etc.) eingesetzt werden können und z.B. zur Versorgung eines Kommissionierarbeitsplatzes dienen.

Das Fahrzeug 12 überfährt das Förderband 88, um ein zuvor angehobenes Lagergut 18 abzugeben. In der Fig. 12 ist die Situation gezeigt, in welcher das Fahrzeug 12 das Lagergut 18 bereits (durch vertikales Absenken) an das Förderband 88 zum Weitertransport des Lagerguts 18 in der X-Richtung abgesetzt hat.

Selbstverständlich ist ebenso die Andienung eines Lagergutes 18 durch das Förderband und die Aufnahme durch ein Fahrzeug 14 möglich.

Aus der Fig. 12 geht ferner hervor, dass die (horizontalen) Abstände der Beine 34 so zueinander gewählt sind, dass der Stetigförderer 86 überfahren werden kann. Alternativ können die Abmessungen der Stetigförderer 86 an das Rastermaß des Bodenlagers 12 (vergleiche Fig. 1) angepasst werden.

Es versteht sich, dass der Stetigförderer 86 der Fig. 12 in einer Höhe vorgesehen ist, die die Übergabe der Lagergüter 18 durch das Fahrzeug 14 ermöglicht.

Fig. 13 ist eine Seitenansicht und veranschaulicht eine mögliche Interaktion von mehreren (schematisch dargestellten) Fahrzeugen 14 untereinander. Fig. 13 zeigt einen oberen Teil eines ersten Fahrzeugs 14 und die Greifeinheit 58' eines zweiten Fahrzeugs 14'. In der Fig. 13 interagieren die beiden Fahrzeuge 14 und 14', wobei für das zweite Fahrzeug 14' nur die Greifeinheit 38' mit ihren Seilen 54' und ihrem Greifrahmen 58' sowie den Fingern 60' veranschaulicht ist. Der Greifrahmen 58' des zweiten Fahrzeugs 14' ist in einem abgesenkten Zustand (vergleiche Vertikalbewegung 62') gezeigt, um das Lagergut 18 (vertikal) von oben zu übernehmen, das vom ersten Fahrzeug 14 bereitgestellt wird. Das erste Fahrzeug 14 ist direkt unter dem zweiten Fahrzeug 14' positioniert, so dass der Greifrahmen 58' des zweiten Fahrzeugs 14' das durch die Oberseite 64 des ersten Fahrzeugs 14 hervorstehende Lagergut 18 durch eine weitere Absenkung des Greifrahmens 58' übernehmen kann.

In diesem Fall ist es von Vorteil, wenn das Lagergut 18 mehrere (seitliche) Ausnehmungen 90 aufweist, wie es in der Schemaansicht der Fig. 14 nochmals verdeutlicht ist. Die Lagergüter 18 können ein oder mehrere seitliche Ausnehmungen 90 aufweisen. In den Fig. 13 und 14 sind auf jeder Seite des Lagerguts 18 zwei vertikal übereinander geordnete Ausnehmungen 90-1 und 90-2 vorgesehen.

Während die Finger 60 des unteren Fahrzeugs 14 in Eingriff mit den unteren Ausnehmungen 90-1 sind, können die Finger 60' des oberen Fahrzeugs 14' in Eingriff mit den oberen (seitlichen) Ausnehmungen 90-2 gebracht werden. Sobald die oberen Finger 60' in Eingriff mit den Ausnehmungen 90-2 sind, können die Finger 60 des unteren Fahrzeugs 14 gelöst werden, um das Lagergut 18 für eine weitere Vertikalbewegung nach oben freizugeben.

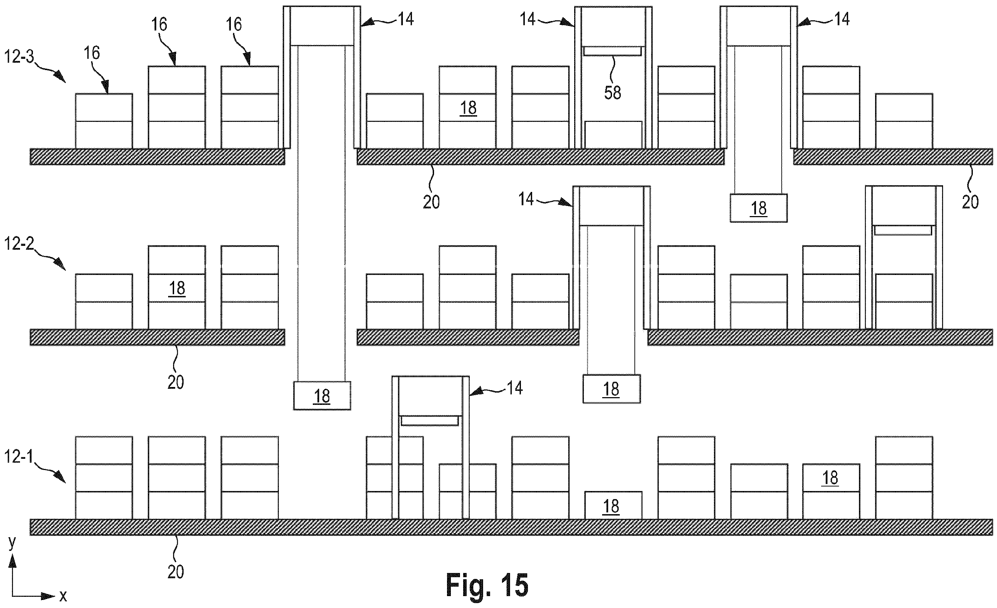

Die Fig. 13 dient ferner der Veranschaulichung eines Mehrebenenkonzepts. Fig. 1 zeigt ein Einebenenkonzept. Die in der Fig. 1 gezeigte Anordnung kann in der vertikalen Richtung Y mehrfach übereinander vorgesehen werden, so dass mehrere Bodenläger 12 in der vertikalen Richtung Y übereinander angeordnet sind (vgl. auch Fig. 15). Die Bodenläger 12 von oberen Ebenen können (nicht dargestellte) Löcher in ihren Böden 20 aufweisen, um die in der Fig. 13 veranschaulichte Interaktion vornehmen zu können. Auf diese Weise können Lagergüter 18 vertikal zwischen Bodenlägern 12, die sich auf unterschiedlichen Ebenen befinden, ausgetauscht werden.

Fig. 15 veranschaulicht das oben skizzierte Mehrebenenkonzept in einer Seitenansicht. In der Fig. 15 sind drei Ebenen E1-E3 vertikal übereinander angeordnet. In der Fig. 15 sind somit auch drei Bodenläger 12-1 bis 12-3 vertikal übereinander angeordnet. Der Austausch der Lagergüter 18 kann in beiden Vertikalrichtungen erfolgen, d.h. die Lagergüter 18 können nach oben und nach unten ausgetauscht werden.

Es versteht sich, dass beliebig viele Ebenen E vertikal übereinander angeordnet werden können.

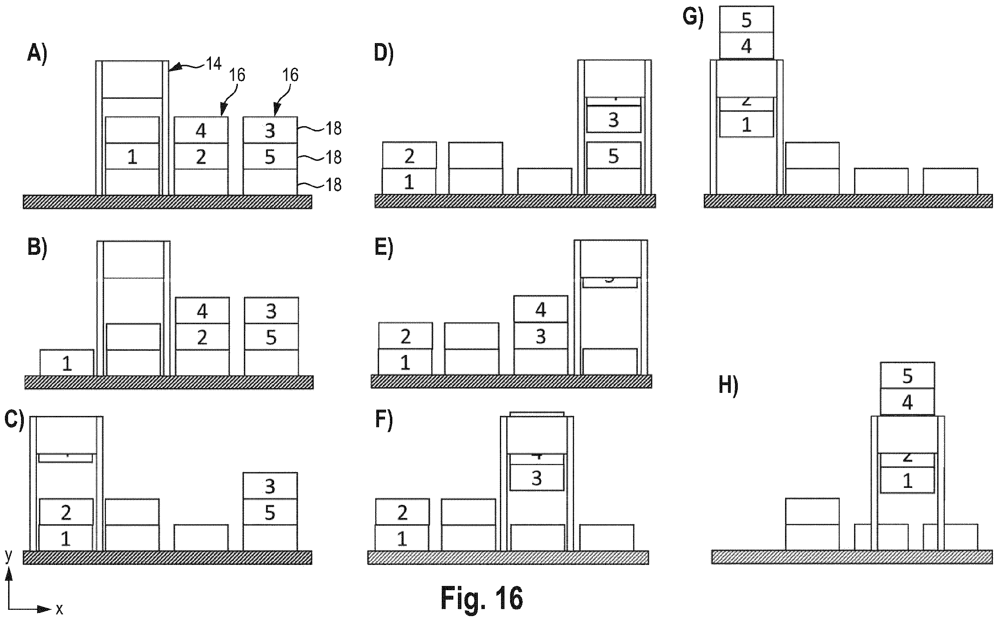

Fig. 16 veranschaulicht schematisch die Möglichkeit, mit den Fahrzeugen 14 eine Sequenzierung durchzuführen. Die Fig. 16A bis 16H zeigen eine zeitliche Abfolge in schematischen Seitenansichten. Es sind exemplarisch neun Lagergüter 18 in drei Stapeln 16 gezeigt, wobei fünf (spezielle) Lagergüter 18 mit den fortlaufenden Nummern "1" bis "5" bezeichnet sind. Diese fünf Lagergüter 18 sind in eine vorbestimmte Reihenfolge (1-2-3-4-5) zu bringen, d.h. diese Lagergüter 18 sind zu sequenzieren. Diese fünf Lagergüter 18 sind chaotisch über die drei Stapel 16 verteilt, vgl. Fig. 16A.

In einem ersten Schritt überfährt das Fahrzeug 14 den ersten (linken) Stapel 16, der das Lagergut 18 mit der Nummer "1" umfasst (Fig. 16A).

Danach hebt das Fahrzeug 14 die beiden oberen Lagergüter 18 (d.h. inkl. Nummer "1") dieses Stapels 16 an, verfährt um eine (Stapel-)Position nach links, setzt das Lagergut mit der Nummer "1" dort ab und transferiert das restliche, nicht näher bezeichnete Lagergut 18 wieder auf den ursprünglichen ersten Stapel 16. Dies ist in der Fig. 16B gezeigt.

Anschließend holt das Fahrzeug 14 die beiden oberen Lagergüter 18 des mittleren Stapels 16, die mit "2" und "4" bezeichnet sind, setzt das (untere) Lagergut 18 mit der Nummer "2" wiederum links auf der Nummer "1" ab (vergleiche Fig. 16C).

Danach fährt das Fahrzeug 14 inkl. dem Lagergut 18 mit der Nummer "4" zum rechten Stapel 16 und hebt das oberste Lagergut 18 mit der Nummer "3" ab (vergleiche Fig. 16D).

Anschließend setzt das Fahrzeug 14 die angehobenen Lagergüter 18 mit den Nummern "3" und "4" auf dem mittleren Stapel 16 ab, der bisher nur noch ein Lagergut 18 umfasste. Dann hebt das Fahrzeug 14 das Lagergut 18 mit der Nummer "5" vom rechten Stapel 16 ab (vergleiche Fig. 16E).

Im Anschluss verfährt das Fahrzeug inklusive dem angehobenen Lagergut 18 mit der Nummer "5" zum mittleren Stapel und hebt zusätzlich die Lagergüter 18 mit den Nummern "3" und "4" ab (vergleiche Fig. 16F), um dann die abseits gelagerten Lagergüter 18 mit den Nummern "1" und "2" zusätzlich anzuheben (vergleiche Fig. 16G).

Das Ergebnis ist ein Lagergutturm, der in der richtigen Reihenfolge (1-2-3-4-5) vorliegt, wie es in den Fig. 16G und 16H gezeigt ist. Dieser perfekt "sortierte" Turm kann anschließend (horizontal) an einen beliebigen Ort bewegt werden, wie es in Fig. 16H angedeutet ist.

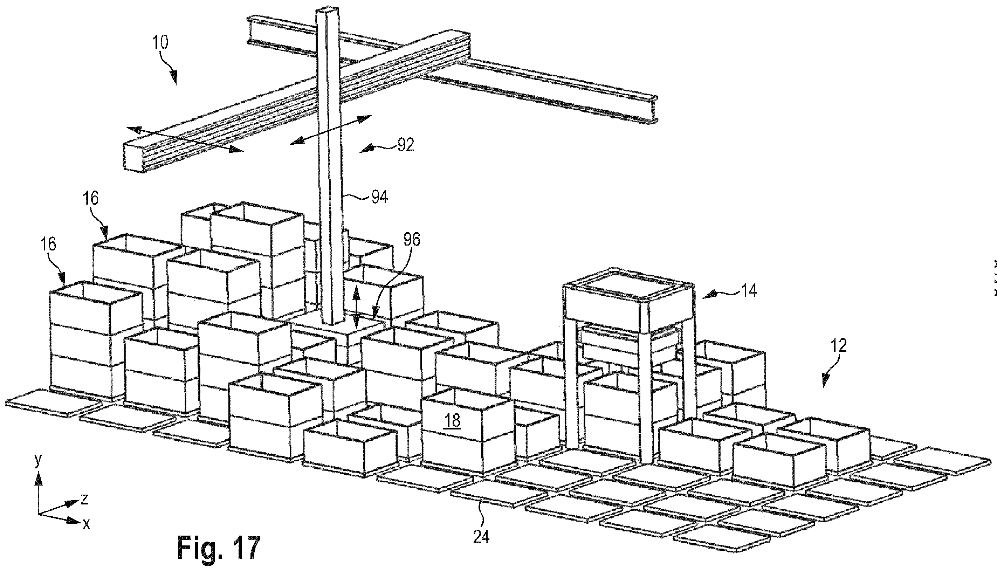

Fig. 17 zeigt eine perspektivische Ansicht einer weiteren Anwendungsmöglichkeit, bei der andere Handhabungs-Maschinen gemeinsam mit den Fahrzeugen 14 agieren.

In diesem Fall wird das schematisch veranschaulichte Bodenlager 12 exemplarisch gemeinsam mit einem Portalroboter 92 genutzt. Der Portalroboter 92 umfasst einen Mast 94. Am unteren Ende des Masts 94 ist ein Lastaufnahmemittel 96 vorgesehen, um die Lagergüter 18 von den Stapeln 16 vertikal anzuheben. Der Mast 14 ist horizontal beweglich, wie es durch nicht näher bezeichnete Pfeile in der Fig. 17 angedeutet ist. Der Mast 94 ist in der Querrichtung Z entlang eines nicht näher bezeichneten Querträgers beweglich gelagert. Der Querträger ist an einem nicht näher bezeichneten Längsträger in der Längsrichtung X beweglich gelagert. Der Querträger und der Längsträger sind in einem vertikal oberen Bereich des Bodenlagers 12 angeordnet. Es versteht sich, dass die in Fig. 17 gezeigten Lagerplatten 24 nur optional vorgesehen sind.

Bei einem derartigen gemeinsamen Agieren von Fahrzeugen 14 mit anderen Handhabungsmaschinen können Teilbereiche des Bodenlagers 12 mit höheren Lagergutstapeln 16 belegt werden, die lediglich mit der Handhabungsmaschine, also z.B. mit dem exemplarischen Portalroboter 92 bedient werden und von den Fahrzeugen 14 nicht überfahren werden können.

### Bezugszeichenliste

- 10: Lager- und Kommissioniersystem/System
- 12: Bodenlager
- 14: (Handhabungs-)Fahrzeug
- 16: Stapel
- 18: Lagergüter
- 20: Boden von 12
- 22: Marker
- 24: Lagerplatte
- 26: Fahrspuren
- 28: Kreuzung von 2b
- 30: Fahrgestell
- 32: Rahmen von 30
- 33: Seitenwand
- 34: Bein von 30
- 35: horizontale Bewegung von 14
- 36: Hubeinheit
- 37: Hubantrieb
- 38: Greifeinheit
- 40: Fahreinheit
- 41: Energiespeicher
- 42: Steuereinheit
- 44: Rad
- 46: Fahrantrieb
- 48: Lenkeinheit
- 50: Lenkachse
- 52: Schwenkrichtung
- 54: Seil
- 56: Seil- oder Bandtrommel
- 58: Greifrahmen
- 60: Finger von 58
- 62: Vertikalbewegung
- 64: Oberseite
- 66: Freiraum
- 68: Sensorik
- 70: Markierung
- 72: Sichtfeld
- 74: Schiene
- 76: Führungsrolle
- 78: Sensor/Code-Leseeinrichtung
- 80: 2D-Code
- 82: Deckel
- 84: zentrale Öffnung
- 86: Stetigförderer
- 88: Förderband
- 90: (seitliche) Ausnehmung in 18
- 92: Portalroboter
- 94: Mast
- 96: Lastaufnahmemittel von 92

## Patentansprüche

1. Lager- und Kommissioniersystem (10) mit einem regallosen Bodenlager (12) und mindestens einem Handhabungs-Fahrzeug (14),
wobei im Bodenlager (12) Stapel (16) aus mehreren vertikal übereinander angeordneten Lagergütern (18) lagerbar sind, wobei die Stapel (16) horizontal beabstandet zueinander ohne Lagereinrichtungen auf einem Boden (20) des Bodenlagers (12) angeordnet werden; und
wobei das Fahrzeug (14) aufweist:
ein Fahrgestell (30) mit einem Rahmen (32) und mit einer Vielzahl von Beinen (34), die an den Rahmen (32) gekoppelt sind und die eine Höhe aufweisen, so dass mehrere der vertikal übereinander gestapelten Lagergüter (18) gleichzeitig vertikal angehoben und in einem angehobenen Zustand horizontal bewegt werden können und so dass das Fahrzeug (14) die Stapel (16) kollisionsfrei in einer Längsrichtung (X) und einer Querrichtung (z) überfahren kann, wobei das Fahrgestell (30) eingerichtet ist, jeden der gelagerten Stapel (30) zum Anheben zu überfahren;
eine Hubeinheit (36), die an dem Fahrgestell (30) angebracht ist und die eingerichtet ist, eines oder mehrere der übereinander gestapelten Lagergüter (18) von jedem der Stapel (16) vertikal anzuheben;
eine Greifeinheit (38), die mit der Hubeinheit (36) verbunden ist und die eingerichtet ist, die Lagergüter (18) zu greifen, zu halten und wieder freizugeben;
mindestens eine Fahreinheit (40), die ein Rad (84), einen Fahrantrieb (46) und eine Lenkeinheit (48) umfasst und die eingerichtet ist, das Fahrzeug (14) und angehobene Lagergüter (18) horizontal zu bewegen, und die eingerichtet ist, eine Fahrrichtung, vorzugsweise um 90°, zu ändern, während das Fahrzeug (14) auf der Stelle steht; und
eine Steuereinheit (42), die mit der mindestens einen Fahreinheit (40) zum horizontalen Bewegen des Fahrzeugs (14) verbunden ist und die mit der Hubeinheit (36) zum vertikalen Anheben und Absenken der Lagergüter (18) verbunden ist,
**dadurch gekennzeichnet, dass** jede der Fahreinheiten (40) in einem Inneren von einem der Beine (34) vorgesehen sind.

2. Lager- und Kommissioniersystem (10) mit einem regallosen Bodenlager (12) und mindestens einem Handhabungs-Fahrzeug (14),
wobei im Bodenlager (12) Stapel (16) aus mehreren vertikal übereinander angeordneten Lagergütern (18) lagerbar sind, wobei die Stapel (16) horizontal beabstandet zueinander ohne Lagereinrichtungen auf einem Boden (20) des Bodenlagers (12) angeordnet werden; und
wobei das Fahrzeug (14) aufweist:
ein Fahrgestell (30) mit einem Rahmen (32) und mit einer Vielzahl von Beinen (34), die an den Rahmen (32) gekoppelt sind und die eine Höhe aufweisen, so dass mehrere der vertikal übereinander gestapelten Lagergüter (18) gleichzeitig vertikal angehoben und in einem angehobenen Zustand horizontal bewegt werden können und so dass das Fahrzeug (14) die Stapel (16) kollisionsfrei in einer Längsrichtung (X) und einer Querrichtung (z) überfahren kann, wobei das Fahrgestell (30) eingerichtet ist, jeden der gelagerten Stapel (30) zum Anheben zu überfahren;
eine Hubeinheit (36), die an dem Fahrgestell (30) angebracht ist und die eingerichtet ist, eines oder mehrere der übereinander gestapelten Lagergüter (18) von jedem der Stapel (16) vertikal anzuheben;
eine Greifeinheit (38), die mit der Hubeinheit (36) verbunden ist und die eingerichtet ist, die Lagergüter (18) zu greifen, zu halten und wieder freizugeben;
mindestens eine Fahreinheit (40), die ein Rad (84), einen Fahrantrieb (46) und eine Lenkeinheit (48) umfasst und die eingerichtet ist, das Fahrzeug (14) und angehobene Lagergüter (18) horizontal zu bewegen, und die eingerichtet ist, eine Fahrrichtung, vorzugsweise um 90°, zu ändern, während das Fahrzeug (14) auf der Stelle steht; und
eine Steuereinheit (42), die mit der mindestens einen Fahreinheit (40) zum horizontalen Bewegen des Fahrzeugs (14) verbunden ist und die mit der Hubeinheit (36) zum vertikalen Anheben und Absenken der Lagergüter (18) verbunden ist;
**dadurch gekennzeichnet, dass** jede der Fahreinheiten (40), die Hubeinheit (36) und die Steuereinheit (40) in ein Inneres des Fahrgestells (30) integriert sind.

3. System (10) nach Anspruch 1 oder 2, wobei der Rahmen (32), in einem oberen vertikalen Bereich des Fahrzeugs (14) angeordnet ist und wobei sich der Rahmen (32) entlang einer Umfangsrichtung des Fahrzeugs (14) erstreckt.

4. System (10) nach Anspruch 3, wobei der Rahmen (32) nach oben offen mit einer zentralen Öffnung (84) ausgebildet ist, so dass die Stapel (16) zentral durch das Fahrgestell (30) hindurch über eine Oberseite (64) des Fahrzeugs (14) hinaus anhebbar sind.

5. System (10) nach Anspruch 4, wobei das Fahrzeug (14) ferner einen Deckel (82) umfasst, der eingerichtet ist, die zentrale Öffnung (84) zu öffnen und zu verschließen.

6. System (10) nach einem der Ansprüche 2 bis 5, wobei jede der Fahreinheiten (40) in einem Inneren von einem der Beine (34) vorgesehen ist.

7. System (10) nach Anspruch 6, wobei die Räder (44) der Fahreinheiten (40) vertikal relativ zu den Beinen (34) beweglich sind, so dass eine Fahrrichtung des Fahrzeugs (14) verstellbar ist, während das Fahrzeug (14) auf den Beinen (34) steht.

8. System (10) nach einem der vorhergehenden Ansprüche, wobei im Bodenlager (12) Fahrspuren (26) zwischen benachbart gelagerten Stapeln (16) definiert sind.

9. System (10) nach einem der vorhergehenden Ansprüche, wobei die Lagergüter (18) in Bezug auf ihr Außenmaß vereinheitlicht sind.

10. System (10) nach einem der vorhergehenden Ansprüche, wobei das Fahrzeug (14) ferner eine Sensorik (68) aufweist, die eingerichtet ist, Codes (80) zu erfassen, die am Boden (20) und/oder an den Lagergütern (18) angebracht sind.

11. System (10) nach einem der vorhergehenden Ansprüche, wobei das Bodenlager (12) eine Vielzahl von stationären bodenfixierten Markern (22) aufweist, wobei jeder der Marker (22) derart auf dem Boden (20) zur Lagerung eines der Stapel (16) positioniert ist, dass das Fahrzeug (14) sowohl in einer Längsrichtung (X) des Bodenlagers (12) als auch in einer Querrichtung (Z) des Bodenlagers (12) jeden der Stapel (16) überfahren kann.

12. System (10) nach Anspruch 11, wobei jeder der Marker (22) ein optisch, kapazitiv oder induktiv erkennbarer Code ist und/oder eine Lagerplatte (24) ist.

13. System (10) nach Anspruch 12, wobei jeder der Codes in den Boden (20) integriert ist oder auf dem Boden (20) angebracht ist.

14. Verfahren zum Betreiben eines Lager- und Kommissioniersystems (10) nach einem der vorhergehenden Ansprüche, das die Schritte aufweist:
Verfahren des Fahrzeugs (14) innerhalb des Blocklagers (12); und
Ändern einer bisherigen Fahrrichtung, indem das Fahrzeug gestoppt wird und die Räder (44) mittels jeder der Lenkeinheiten (48) auf der Stelle in eine neue Fahrrichtung gedreht werden.

15. Verfahren nach Anspruch 14, wobei das Fahrgestell (30), vor dem Ändern der bisherigen Fahrrichtung, relativ zu den Rädern (44) vertikal abgesenkt wird und bleibt, so dass das Fahrzeug (14) auf den Beinen (34) steht, bis die Räder (44) in die neue Fahrrichtung gedreht sind.

16. Verfahren nach Anspruch 14 oder 15, das ferner aufweist:
Anheben von einem oder mehreren der Lagergüter von einem der Stapel (16), während das Fahrzeug (14) zentral ausgerichtet über dem entsprechenden Stapel (16) steht.

## Claims

1. A storage and picking system (10), which includes a floor storage (12) free of racks, and at least one handling vehicle (14),
wherein, in the floor storage (12), stacks (16) of several storage items (18) arranged vertically on top of each other are storable, wherein the stacks (16) are arranged horizontally spaced from one another without storing devices on a floor (20) of the floor storage (12); and
wherein the vehicle (14) comprises:
a chassis (30) including a frame (32) and a plurality of legs (34), which are coupled to the frame (32) and have a height such that several ones of the storage items (18), which are stacked vertically on top of each other, are vertically liftable at the same time and are horizontally movable in a lifted state and such that the vehicle (16) can pass over the stacks (16) in a longitudinal direction (X) and in a transverse direction (z) without collisions, wherein the chassis (30) is configured to pass over each of the stored stacks (30) for lifting;
a lifting unit (36) attached to the chassis (30) and configured to vertically lift one or more of the storage items (18), which are stacked on top of each other, from each of the stacks (16);
a gripping unit (38) connected to the lifting unit (36) and being configured to grip, hold, and release again the storage items (18);
at least one traveling unit (40) including a wheel (44), a traveling drive (46), and a steering unit (48), and being configured to horizontally move the vehicle (14) and lifted storage items (18), and being configured to change traveling direction, preferably by 90°, while the vehicle (14) is standing still; and
a controlling unit (42) connected to the at least one traveling unit (40) for horizontally moving the vehicle (14), and connected to the lifting unit (36) for vertically lifting and lowering the storage items (18),
**characterized in that** each of the traveling units (40) is provided in an interior of one of the legs (34).

2. A storage and picking system (10), which includes a floor storage (12) free of racks, and at least one handling vehicle (14),
wherein in the floor storage (12) stacks (16) of several storage items (18) arranged vertically on top of each other are storable, wherein the stacks (16) are arranged horizontally spaced to one another without storing devices on a floor (20) of the floor storage (12); and
wherein the vehicle (14) comprises:
a chassis (30) including a frame (32) and a plurality of legs (34), which are coupled to the frame (32) and comprise a height such that several ones of the storage items (18), which are stacked vertically on top of each other, are vertically liftable at the same time and are horizontally movable in a lifted state and so that the vehicle (14) can pass over the stacks (16) in a longitudinal direction (X) and in a transverse direction (z) without collisions, wherein the chassis (30) is configured to pass over each of the stored stacks (30) for lifting;
a lifting unit (36) attached to the chassis (30) and configured to vertically lift one or more of the storage items (18), which are stacked on top of each other, from each of the stacks (16);
a gripping unit (38) connected to the lifting device (36) and being configured to grip, hold and release again the storage items (18);
at least one traveling unit (40) including a wheel (84), a traveling drive (46), and a steering unit (48), and being configured to horizontally move the vehicle (14) and the lifted storage items (18), and being configured to change traveling direction, preferably by 90°, while the vehicle (14) is standing still; and
a controlling unit (42) connected to the at least one traveling unit (40) for horizontally moving the vehicle (14), and connected to the lifting unit (36) for vertically lifting and lowering the storage items (18);
**characterized in that** each of the traveling units (40), the lifting unit (36) and the controlling unit (40) are integrated into an interior of the chassis (30).

3. The system (10) of claim 1 or 2, wherein the frame (32) is arranged in an upper vertical region of the vehicle (14), and wherein the frame (32) extends along a circumferential direction of the vehicle (14).

4. The system (10) of claim 3, wherein the frame (32) is formed open at the top with a central opening (84), such that the stacks (16) are liftable centrally through the chassis (30) beyond an upper side (64) of the vehicle (14).

5. The system (10) of claim 4, wherein the vehicle (14) further includes a cover (82) being configured to open and close the central opening (84).

6. The system (10) of any one of claims 2 to 5, wherein each of the traveling units (40) is provided in an interior of one of the legs (34).

7. The system (10) of claim 6, wherein the wheels (44) of the traveling units (40) are movable vertically relative to the legs (34) such that a traveling direction of the vehicle (14) is adjustable while the vehicle (14) is standing on the legs (34).

8. The system (10) of one of the preceding claims, wherein, in the floor storage (12), traveling lanes (26) are defined between stacks (16) stored adjacent to each other.

9. The system (10) of one of the preceding claims, wherein the storage items (18) are standardized with respect to their external dimension.

10. The system (10) of one of the preceding claims, wherein the vehicle (14) further comprises a sensor system (68) configured to detect codes (80), which are attached on the floor (20) and/or on the storage items (18).

11. The system (10) of one of the preceding claims, wherein the floor storage (12) comprises a plurality of stationary markers (22) fixed to the floor, wherein each of the markers (22) is positioned on the floor (20) for storing one of the stacks (16) such that the vehicle (14) can pass over each of the stacks (16) in both a longitudinal direction (X) of the floor storage (12) and a transverse direction (z) of the floor storage (12).

12. The system (10) of claim 11, wherein each of the markers (22) is an optically, capacitively, or inductively detectable code, and/or is a storage plate (24).

13. The system (10) of claim 12, wherein each of the codes is integrated into the floor (20) or attached on the floor (20).

14. A method for operating a storage and picking system (10) of any one of the preceding claims, comprising the steps:
traveling the vehicle (12) within the floor storage (12); and
changing a previous traveling direction by stopping the vehicle and rotating the wheels (44), by means of each of the steering units (48), on the spot into a new traveling direction.

15. The method of claim 14, wherein the chassis (30), before the previous traveling direction is changed, is and remains vertically lowered relative to the wheels (44) such that the vehicle (14) stands on the legs (34) until the wheels (44) have been rotated into the new traveling direction.

16. The method of claim 14 or 15, further comprising:
lifting one or more of the storage items from one of the stacks (16) while the vehicle (14) stands orientated centrally over the corresponding stack (16).

## Revendications

1. Système d'entreposage et de préparation de commandes (10) comportant un entrepôt au sol (12) sans rayonnage et au moins un véhicule de manipulation (14),
dans lequel des empilages (16), constitués de plusieurs marchandises entreposées (18) disposées verticalement les unes au-dessus des autres, peuvent être entreposés dans l'entrepôt au sol (12), dans lequel les empilages (16) sont disposés horizontalement à distance les uns des autres sans dispositifs d'entreposage sur un sol (20) de l'entrepôt au sol (12) ; et
dans lequel le véhicule (14) présente :
un châssis (30) comportant un cadre (32) et comportant une pluralité de pieds (34) qui sont accouplés au cadre (32) et qui présentent une hauteur, de sorte que plusieurs des marchandises entreposées (18) empilées verticalement les unes au-dessus des autres peuvent être simultanément levées verticalement et déplacées horizontalement dans un état levé et de sorte que le véhicule (14) peut survoler les empilages (16) sans collision dans une direction longitudinale (X) et une direction transversale (z), dans lequel le châssis (30) est conçu pour survoler chacun des empilages (30) entreposés pour le levage ;
une unité de levage (36) qui est montée sur le châssis (30) et qui est conçue pour lever verticalement une ou plusieurs des marchandises entreposées (18) empilées les unes au-dessus des autres depuis chacun des empilages (16) ;
une unité de préhension (38) qui est reliée à l'unité de levage (36) et qui est conçue pour saisir, maintenir et libérer à nouveau les marchandises entreposées (18) ;
au moins une unité de circulation (40) qui comprend une roue (84), un entraînement de circulation (46) et une unité de direction (48) et qui est conçue pour déplacer horizontalement le véhicule (14) et les marchandises entreposées (18) levées, et qui est conçue pour changer une direction de circulation, de préférence de 90°, tandis que le véhicule (14) est sur place ; et
une unité de commande (42) qui est connectée à l'au moins une unité de circulation (40) pour le déplacement horizontal du véhicule (14) et qui est connectée à l'unité de levage (36) pour le levage et l'abaissement verticaux des marchandises entreposées (18),
**caractérisé en ce que** chacune des unités de circulation (40) est prévue dans un intérieur de l'un des pieds (34).

2. Système d'entreposage et de préparation de commandes (10) comportant un entrepôt au sol (12) sans rayonnage et au moins un véhicule de manipulation (14),
dans lequel des empilages (16), constitués de plusieurs marchandises entreposées (18) disposées verticalement les unes au-dessus des autres, peuvent être entreposés dans l'entrepôt au sol (12), dans lequel les empilages (16) sont disposés horizontalement à distance les uns des autres sans dispositifs d'entreposage sur un sol (20) de l'entrepôt au sol (12) ; et
dans lequel le véhicule (14) présente :
un châssis (30) comportant un cadre (32) et comportant une pluralité de pieds (34) qui sont accouplés au cadre (32) et qui présentent une hauteur, de sorte que plusieurs des marchandises entreposées (18) empilées verticalement les unes au-dessus des autres peuvent être simultanément levées verticalement et déplacées horizontalement dans un état levé et de sorte que le véhicule (14) peut survoler les empilages (16) sans collision dans une direction longitudinale (X) et une direction transversale (z), dans lequel le châssis (30) est conçu pour survoler chacun des empilages (30) entreposés pour le levage ;
une unité de levage (36) qui est montée sur le châssis (30) et qui est conçue pour lever verticalement une ou plusieurs des marchandises entreposées (18) empilées les unes au-dessus des autres depuis chacun des empilages (16) ;
une unité de préhension (38) qui est reliée à l'unité de levage (36) et qui est conçue pour saisir, maintenir et libérer à nouveau les marchandises entreposées (18) ;
au moins une unité de circulation (40) qui comprend une roue (84), un entraînement de circulation (46) et une unité de direction (48) et qui est conçue pour déplacer horizontalement le véhicule (14) et les marchandises entreposées (18) levées, et qui est conçue pour changer une direction de circulation, de préférence de 90°, tandis que le véhicule (14) est sur place ; et
une unité de commande (42) qui est connectée à l'au moins une unité de circulation (40) pour le déplacement horizontal du véhicule (14) et qui est connectée à l'unité de levage (36) pour le levage et l'abaissement verticaux des marchandises entreposées (18) ;
**caractérisé en ce que** chacune des unités de circulation (40), l'unité de levage (36) et l'unité de commande (40) sont intégrées dans un intérieur du châssis (30).

3. Système (10) selon la revendication 1 ou 2, dans lequel le cadre (32) est disposé dans une zone verticale supérieure du véhicule (14) et dans lequel le cadre (32) s'étend le long d'une direction circonférentielle du véhicule (14).

4. Système (10) selon la revendication 3, dans lequel le cadre (32) est ouvert vers le haut avec une ouverture centrale (84), de sorte que les empilages (16) peuvent être levés de manière centrale à travers le châssis (30) au-delà d'une face supérieure (64) du véhicule (14).

5. Système (10) selon la revendication 4, dans lequel le véhicule (14) comprend en outre un élément de recouvrement (82) conçu pour ouvrir et fermer l'ouverture centrale (84).

6. Système (10) selon l'une des revendications 2 à 5, dans lequel chacune des unités de circulation (40) est prévue dans un intérieur de l'un des pieds (34).

7. Système (10) selon la revendication 6, dans lequel les roues (44) des unités de circulation (40) peuvent être déplacées verticalement par rapport aux pieds (34) de sorte qu'une direction de circulation du véhicule (14) est ajustable tandis que le véhicule (14) repose sur les pieds (34).

8. Système (10) selon l'une des revendications précédentes, dans lequel des voies de circulation (26) sont définies dans l'entrepôt au sol (12) entre des empilages (16) entreposés de manière adjacente.

9. Système (10) selon l'une des revendications précédentes, dans lequel les marchandises entreposées (18) sont uniformisées vis-à-vis de leurs dimensions extérieures.

10. Système (10) selon l'une des revendications précédentes, dans lequel le véhicule (14) présente en outre un système de capteurs (68) configuré pour détecter des codes (80) montés sur le sol (20) et/ou sur les marchandises entreposées (18).

11. Système (10) selon l'une des revendications précédentes, dans lequel l'entrepôt au sol (12) présente une pluralité de marqueurs (22) stationnaires fixés au sol, dans lequel chacun des marqueurs (22) est positionné sur le sol (20) pour l'entreposage de l'un des empilages (16) de telle sorte que le véhicule (14) peut survoler chacun des empilages (16) à la fois dans une direction longitudinale (X) de l'entrepôt au sol (12) et dans une direction transversale (Z) de l'entrepôt au sol (12).

12. Système (10) selon la revendication 11, dans lequel chacun des marqueurs (22) est un code détectable par voie optique, capacitive ou inductive et/ou est une plaque d'entreposage (24).

13. Système (10) selon la revendication 12, dans lequel chacun des codes est intégré dans le sol (20) ou est monté sur le sol (20).

14. Procédé permettant de faire fonctionner un système d'entreposage et de préparation de commandes (10) selon l'une des revendications précédentes, présentant les étapes consistant à :
déplacer le véhicule (14) à l'intérieur de l'entrepôt au sol (12) ; et
changer une direction de circulation précédente en arrêtant le véhicule et en faisant tourner les roues (44) sur place dans une nouvelle direction de circulation au moyen de chacune des unités de direction (48).

15. Procédé selon la revendication 14, dans lequel, avant le changement de la direction de circulation précédente, le châssis (30) est abaissé verticalement par rapport aux roues (44) et le reste, de sorte que le véhicule (14) repose sur les pieds (34) jusqu'à ce que les roues (44) soient tournées dans la nouvelle direction de circulation.

16. Procédé selon la revendication 14 ou 15, présentant en outre :
le levage d'une ou de plusieurs des marchandises entreposées depuis l'un des empilages (16) tandis que le véhicule (14) se trouve en alignement central au-dessus de l'empilage (16) correspondant.
